# EUROPEAN PATENT SPECIFICATION

(11) **EP 4 566 475 B1**
(45) Date of publication and mention of the grant of the patent: **29.07.2026**
(21) Application number: 25170521.6
(22) Date of filing: 26.08.2021
(51) Int. Cl.: B32B 5/02, B32B 5/06, B32B 5/26, B32B 7/09, A41D 27/00, A41D 31/18, A43B 1/00, A43B 1/02

(54) **DEBOSSED AND PLEATED FINISHES FOR COMPOSITE NONWOVEN TEXTILES SUITABLE FOR APPAREL AND METHODS FOR PRODUCING THE SAME**
GEPRÄGTE UND PLISSIERTE ENDBEARBEITUNGEN FÜR BEKLEIDUNGSFÄHIGE VERBUNDVLIESSTOFFE UND VERFAHREN ZUR HERSTELLUNG DAVON
FINIS DECORSES ET PLISSES POUR TEXTILES NON TISSES COMPOSITES ADAPTES A DES HABILLEMENT ET LEURS PROCEDES DE PRODUCTION

(43) Date of publication of application: 11.06.2025
(62) Divisional of application: 21772951.6
(73) Proprietor: Nike Innovate C.V., Beaverton, OR 97005-6453 (US)
(72) Inventor: HARTMAN, Lucas, Beaverton, Oregon, 97005 (US); KULIKOVICH, Vadim, Beaverton, Oregon, 97005 (US); LUND, Dallas, Beaverton, Oregon, 97005 (US); NGUYEN, Nina, Beaverton, Oregon, 97005 (US); STAUB, Andrea J., Beaverton, Oregon, 97005 (US); ZHU, XiaoJun, Beaverton, Oregon, 97005 (US)
(74) Representative: Müller-Boré & Partner Patentanwälte PartG mbB

(56) References cited:
- WO-A1-2014/105778
- WO-A1-2017/004309
- WO-A1-2019/111203
- WO-A1-2019/231544
- WO-A2-2006/118838

## Description

### TECHNICAL FIELD

Aspects herein are directed to debossed and pleated finishes for composite nonwoven textiles suitable for apparel and other articles and methods for producing the same.

### BACKGROUND

Traditional nonwoven textiles have features that are generally not suitable for use in articles of apparel. Due to these features, as well as end uses in, for example, the cleaning industry and the personal hygiene industry, traditional nonwoven textiles can be incompatible with finishing processes and techniques that are commonly utilized in connection with knit and/or woven textiles. As a result, traditional nonwoven textiles typically lack aesthetically pleasing and/or functional features that are desirable in articles of apparel.

WO 2014/105778 A1 discloses a composite textile material suitable for producing both upper and lower body articles of apparel, comprising a first outer fabric, e.g. a nonwoven, and a second outer fabric, e.g. a nonwoven, which are bonded discontinuously, e.g. using adhesive, to opposite sides of an elastomeric inner layer. By tensioning the inner layer, then bonding the outer layers to the tensioned inner layer and then releasing the tension from the inner layer, pleats are formed.

### BRIEF DESCRIPTION OF THE FIGURES

A first aspect of the present invention relates to a pleated construction comprising a composite nonwoven textile, as defined in claim 1.

A second aspect of the present invention relates to a method of manufacturing a composite nonwoven textile havig a plurality of pleats, as defined in claim 11.

Particular embodiments are defined in the dependent claims.

Examples of aspects herein are described in detail below with reference to the attached drawing figures, wherein:
FIG. 1 illustrates an example lifecycle for an example printed composite nonwoven textile in accordance with aspects herein;
FIG. 2 illustrates a first web of fibers for use in the example composite non woven textile of FIG. 1 in accordance with aspects herein;
FIG. 3 illustrates a printed layer for use in the example composite nonwoven textile of FIG. 1 in accordance with aspects herein;
FIG. 4 illustrates a second web of fibers for use in the example composite nonwoven textile of FIG. 1 in accordance with aspects herein;
FIG. 5 illustrates an optional third web of fibers for use in the example composite nonwoven textile of FIG. 1 in accordance with aspects herein;
FIG. 6 illustrates an elastomeric layer for use in the example composite nonwoven textile of FIG. 1 in accordance with aspects herein;
FIG. 7 illustrates an example manufacturing process for use in making the example printed composite nonwoven textile of FIG. 1 and for further use in making an article of apparel using the example printed composite nonwoven textile of FIG. 1 in accordance with aspects herein;
FIG. 8 illustrates an example printed layer comprising an interior web of fibers and a printed component produced using the manufacturing process of FIG. 7 in accordance with aspects herein;
FIG. 9 illustrates a cross-section view taken at cut line 9-9 of FIG. 8 in accordance with aspects herein;
FIG. 10 illustrates a cross-section view of an alternative printed component for the example printed layer of FIG. 8 in accordance with aspects herein;
FIG. 11 illustrates an example printed composite nonwoven textile with the printed layer of FIG. 8 produced using the manufacturing process of FIG. 7 in accordance with aspects herein;
FIG. 12 illustrates a cross-section view taken at cut line 12-12 of FIG. 11 in accordance with aspects herein;
FIG. 13 illustrates a magnified view taken at area 13 of FIG. 12 in accordance with aspects herein;
FIG. 14 illustrates a magnified view taken at area 14 of FIG. 12 in accordance with aspects herein;
FIG. 15 illustrates an example printed layer comprising a spunlace layer and a printed component produced using the manufacturing process of FIG. 7 in accordance with aspects herein;
FIG. 16 illustrates a cross-section view taken at cut line 16-16 of FIG. 15 in accordance with aspects herein;
FIG. 17 illustrates a cross-section view of an alternative printed component for the example printed layer of FIG. 15 in accordance with aspects herein;
FIG. 18 illustrates an example printed composite nonwoven textile with the printed layer of FIG. 15 produced using the manufacturing process of FIG. 7 in accordance with aspects herein;
FIG. 19 illustrates a cross-section view taken at cut line 19-19 of FIG. 18 in accordance with aspects herein;
FIG. 20 illustrates a magnified view taken at area 20 of FIG. 19 in accordance with aspects herein;
FIG. 21 illustrates a magnified view taken at area 21 of FIG. 19 in accordance with aspects herein.
FIG. 22 illustrates an example upper body article of apparel in accordance with aspects herein;
FIG. 23 illustrates an example lower body article of apparel in accordance with aspects herein;
FIG. 24 illustrates a cross-section view taken at cut line 24-24 of FIG. 22 in accordance with aspects herein;
FIG. 25 illustrates a cross-section view taken at cut line 25-25 of FIG. 23 in accordance with aspects herein;
FIG. 26 illustrates an exploded view of an example composite nonwoven textile for use in finishing processes and techniques in accordance with aspects herein;
FIG. 27A illustrates a first outer facing side of an example composite nonwoven textile with a debossed portion in accordance with aspects herein;
FIG. 27B illustrates a second outer facing side of the example composite nonwoven textile of FIG. 27A in accordance with aspects herein;
FIG. 28 illustrates a cross-section view of the example composite nonwoven textile of FIG. 27A in accordance with aspects herein;
FIG. 29 illustrates an example manufacturing process for use in forming the debossed portion of the example composite nonwoven textile of FIG. 27A and for further use in making an article of apparel using the example composite nonwoven textile of FIG. 27A in accordance with aspects herein;
FIG. 30A illustrates an outer-facing surface of an example upper body article of apparel in accordance with aspects herein;
FIG. 30B illustrates an inner-facing surface of the example upper body article of apparel of FIG. 30A in accordance with aspects herein;
FIG. 31A illustrates an outer-facing surface of an example lower body article of apparel in accordance with aspects herein apparel item;
FIG. 31B illustrates an inner-facing surface of the example lower body article of apparel of FIG. 31A in accordance with aspects herein;
FIG. 32A illustrates a first outer facing side of an example pleated construction in accordance with aspects herein;
FIG. 32B illustrates a second outer facing side of the example pleated construction of FIG. 32A in accordance with aspects herein;
FIG. 33 illustrates an exploded view of the example pleated construction of FIG. 32A in accordance with aspects herein;
FIG. 34 illustrates an example manufacturing process for use in making in forming the pleated construction of FIG. 32A and for further use in making an apparel item using the pleated construction of FIG. 32A in accordance with aspects herein;
FIG. 35 illustrates an example upper body article of apparel in accordance with aspects herein;
FIG. 36 illustrates an example lower body article of apparel in accordance with aspects herein; and
FIG. 37 illustrates a cross-section view of the example upper body article of apparel of FIG. 35 in accordance with aspects herein.

### DETAILED DESCRIPTION

The subject matter of the present invention is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" and/or "block" might be used herein to connote different elements of methods employed, the terms should not be interpreted as implying any particular order among or between various steps herein disclosed unless and except when the order of individual steps is explicitly stated.

Traditional nonwoven textiles generally have features that are not suitable for use in articles of apparel. Such features may include a lack of stretch and recovery properties, heavy weights, lack of drapability, a rough hand, symmetric faces or surfaces, and, in some instances where increased insulation is desired, lack of insulation properties. Due to these features, as well as end uses in, for example, the cleaning industry and the personal hygiene industry, traditional nonwoven textiles may be difficult to print and may not include aesthetically pleasing properties. Moreover, in instances where a nonwoven textile is printed, the printed aesthetic is applied to an outermost surface, is of poor quality, and is diminished over time due to, for example, abrasion. Such a printed aesthetic is not desirable for nonwoven textiles that are suitable for use in articles of apparel.

Aspects herein are directed to a printed composite nonwoven textile suitable for use in apparel and other articles and methods of making the same. At a high level, the printed composite nonwoven textile comprises one or more entangled webs of fibers and a printed layer (e.g., an interior layer including a printed component). In example aspects, the printed composite nonwoven textile comprises a first entangled web of fibers and an interior layer. The first entangled web of fibers has a first face and an opposite second face. The first face of the first entangled web forms, at least in part, a first facing side of the printed composite nonwoven textile. The interior layer has a first face positioned adjacent to the second face of the first entangled web of fibers. The first face of the interior layer comprises a printed component having a first portion that is more incorporated into the first entangled web of fibers than a second portion of the printed component.

In other example aspects, the printed composite nonwoven textile may include one or more additional layers (e.g., a second entangled web of fibers, a third entangled web of fibers, and/or an elastomeric layer) that are layered together and/or entangled with the first entangled web and/or the interior layer. In one such aspect, the printed composite nonwoven textile includes a second entangled web of fibers that has a first face and an opposite second face that forms, at least in part, a second facing side of the printed composite nonwoven textile. As such, the interior layer is positioned between the first and second entangled webs of fibers such that the first face of the interior layer is adjacent to the second face of the first entangled web of fibers and the second face of the interior layer is adjacent to the first face of the second entangled web of fibers.

Additionally, and in accordance with aspects herein, on account of features of the first and second entangled webs of fibers, as well as features of the interior layer and/or any additional layers, the printed composite nonwoven textile may be asymmetrically faced (e.g., a printed asymmetrical-faced composite nonwoven textile). In further example aspects, these features may be configured such that the printed composite nonwoven textile is suitable for an article of apparel. When the printed composite nonwoven textile is incorporated into an article of apparel, the first facing side forms an outer-facing surface of the article of apparel, and the second facing side forms an inner-facing surface of the article. As such, the first entangled web may have features that makes it suitable for exposure to an external environment when the printed asymmetrical-faced composite nonwoven textile is incorporated into the article of apparel. For example, the fibers that form the first entangled web may have a denier that is about two times greater than the denier of the fibers used to form the second entangled web such that the first entangled web may better withstand abrasion forces without breakage of the fibers and thus, enhance the durability of the printed component.

Features of the second entangled web of fibers make it suitable for forming a skin-facing surface when the printed asymmetrical-faced composite nonwoven textile is formed into the article of apparel. For instance, the fibers that form the second entangled web may have a denier that is about half the denier of the fibers used to form the first entangled web because the second facing side may be less exposed to abrasion forces. Moreover, a smaller denier may produce a soft hand making it comfortable for skin or near skin contact. Moreover, the second entangled web may include silicone-coated fibers which also imparts a soft hand and improves drapability of the textile (i.e., makes the textile less stiff).

Other asymmetric features of the printed composite nonwoven textile contemplated herein include the printed component and/or different color properties associated with the first facing side and the second facing side. In one aspect, the printed component may be more visible on the first facing side than the second facing side. In another aspect, the printed component may be visible on the first facing side but not the second facing side. Other aspects contemplate that the color properties may be in the form of a heather effect that is more pronounced on the first facing side compared to the second facing side. The printed component and the different color properties may impart a desirable aesthetic to an apparel item formed form the nonwoven textile and may also provide a visual marker to a wearer as to which side of the apparel item is outer-facing and which side is inner-facing. The different color properties may also make the apparel item suitable for reversible wear (i.e., wearing the apparel item "inside out"). The different color properties may, for instance, be imparted to the sides by selecting particular colors for fibers forming the different layers of the textile and by selecting entanglement parameters such that the colored fibers are selectively moved more to the first face as compared to the second face or vice versa.

The one or more additional layers of the printed composite nonwoven textile may further include an elastomeric layer positioned between the first and second entangled webs of fibers. The elastomeric layer imparts stretch and recovery properties to the printed composite nonwoven textile making it suitable for use in articles of apparel such as upper body garments and lower body garments. On its own, the elastomeric layer may lack sufficient tensile strength to withstand normal wear and tear. Thus, the elastomeric layer is integrated into the printed composite nonwoven textile by extending fibers from the different webs through the elastomeric layer using an entanglement process to produce a cohesive structure.

In some example aspects, the one or more additional layers of the printed composite nonwoven textile include additional entangled webs (e.g., a third entangled web of fibers) layered together with the elastomeric layer. The weights of the pre-entangled webs may be selected to achieve a lightweight composite nonwoven textile having a minimal thickness after entanglement. Moreover, selection of the number of entangled webs, fiber denier, type of fiber, length of fibers, and the like, produces a resulting printed composite nonwoven textile that provides enhanced insulation through trapping of air between the fibers forming the textile. Additionally, properties of the different webs and/or the number of webs used to form the printed composite nonwoven textile may be adjusted to achieve different desired end properties for the printed nonwoven textile including different desired end properties for each of the sides of the printed composite nonwoven textile. The result is a lightweight, printed asymmetrical-faced composite nonwoven textile with stretch and recovery, good drape, an interesting visual aesthetic, good resistance to abrasion, and a soft hand, making the composite nonwoven textile ideal for forming articles of apparel suitable for athletic wear.

The composite nonwoven textile contemplated herein may be finished in a variety of ways. For instance, the textile may be printed with one or more patterns, graphics, logos, and the like using selected printing techniques. In one example aspect, printing may be applied to one or more of the webs of fibers prior to entanglement such that the printed component is integrated into the nonwoven textile during entanglement. Moreover, when the nonwoven textile is formed into an article of apparel, different techniques may be used to seam textile edges together. For example, textile edges may be overlapped, and an entanglement process may be used to entangle together fibers from the textile edges thereby forming a seam.

Aspects herein further contemplate that the printed composite nonwoven textile is recyclable, and in some aspects, the textile may be fully recyclable. Thus, in aspects, the fibers selected to form the entangled webs may include recycled materials including recycled polyethylene terephthalate (PET) fibers, commonly known as polyester fibers. Additionally, materials selected to form the elastomeric layer may also be fully recyclable. Use of recycled fibers and materials reduces the carbon footprint of the printed composite nonwoven textile.

The printed composite nonwoven textile is formed by positioning a printed layer (e.g., an interior layer including a printing component) between the first web of fibers and the one or more additional layers to form a composite structure. Prior to forming the composite structure, the printed layer may be formed by utilizing a printing technique to form a printed component on an interior layer. Moreover, the selection of properties for the first web of fibers, the interior layer, and the one or more additional layers, such as number of webs, fiber denier, weight of the individual webs, fiber length, fiber color, and fiber coating, is based on desired end properties of the printed composite nonwoven textile. After forming the printed layer and then combining the same with the first web of fibers and the one or more additional layers to form the composite structure, a mechanical entanglement process is performed. In one example aspect, the mechanical entanglement process is needlepunching. Different parameters associated with the needlepunching process such as needle selection, stitch density, penetration depth, direction of penetration, number of needle passes, and the like, are selected based on the desired end properties of the asymmetrical-faced printed composite nonwoven textile. For example, the parameters may be selected to produce a nonwoven textile that has a desired thickness, a desired degree of stretch and recovery, a desired weight, a desired drape or stiffness, and the like.

Additional aspects herein are directed to methods of making a printed composite nonwoven textile, and in general, such methods include one or more steps related to forming a printed layer, combining the printed layer with a first web of fibers and/or one additional layers to form a composite structure, and subjecting the composite structure to an entanglement process. In example aspects a method of manufacturing a printed composite nonwoven textile includes a step of positioning a first face of a printed layer adjacent to a second face of a first web of fibers to form a composite structure. The printed layer includes a printed component, which may be formed, at least in part, by a colorant that was previously applied to an interior layer. The method of manufacturing further includes a step of subjecting the composite structure to a needle entanglement process in which, subsequently thereto, at least a portion of the printed component is incorporated into the first web of fibers.

In some example aspects, a method of manufacturing a printed asymmetrical-faced composite nonwoven textile includes a step of utilizing a print technique to form a printed component on an interior layer to from a printed layer and a subsequent step of positioning a first face of the printed layer adjacent to a second face of a first web of fibers to form a composite structure. The method includes another step of subjecting the composite structure to a variable entanglement process in which, subsequently thereto, at least a portion of the printed component and a first face of the first web of fibers form, at least in part, a first facing side of the asymmetrical-faced composite nonwoven textile.

In further example aspects, a printing technique (e.g., application of a colorant via digital printing, application of a sublimation dye via sublimation printing, etc.) may be utilized to form the printed component on the interior layer. Such aspects contemplate that the printed component may be formed on the interior layer pre-entanglement (i.e., prior to entangling fibers of the one or more entangled webs of fibers included in the printed composite nonwoven textile). These aspects contemplate that the interior layer may comprise a web of fibers (e.g., a pre-entangled web of fibers) and further contemplate that the interior layer may be a spunlace layer and/or may comprise spunlace fibers.

As used herein, the term "article of apparel" is intended to encompass articles worn by a wearer. As such, they may include upper body garments (e.g., tops, t-shirts, pullovers, hoodies, jackets, coats, and the like), and lower body garments (e.g., pants, shorts, tights, capris, unitards, and the like). Articles of apparel may also include hats, gloves, sleeves (arm sleeves, calf sleeves), articles of footwear such as uppers for shoes, and the like. The term "inner-facing surface" when referring to the article of apparel means the surface that is configured to face towards a body surface of a wearer, and the term "outer-facing surface" means that surface this is configured to face away from the body surface of the wearer and toward an external environment. The term "innermost-facing surface" means the surface closest to the body surface of the wearer with respect to other layers of the article of apparel, and the term "outermost-facing surface" means the surface that is positioned furthest away from the body surface of the wearer with respect to the other layers of the article of apparel.

As used herein, the term "nonwoven textile" as used herein refers to fibers that are held together by mechanical and/or chemical interactions without being in the form of a knit, woven, braided construction, or other structured construction. In a particular aspect, the nonwoven textile includes a collection of fibers that are mechanically manipulated to form a mat-like material. Stated differently nonwoven textiles are directly made from fibers. The nonwoven textile may include different webs of fibers formed into a cohesive structure, where the different webs of fibers may have a different or similar composition of fibers and/or different properties. The term "web of fibers" refers to a web of fibers prior to undergoing a mechanical entanglement process with one or more other webs of fibers. The web of fibers includes fibers that have undergone a carding and lapping process that generally aligns the fibers in one or more common directions that extend along an x, y plane and that achieves a desired basis weight. The web of fibers may also undergo a light needling process or mechanical entanglement process that entangles the fibers of the web to a degree such that the web of fibers forms a cohesive structure that can be manipulated (e.g., rolled on to a roller, un-rolled from the roller, stacked, and the like). The web of fibers may also undergo one or more additional processing steps such as printing prior to being entangled with other webs of fibers to form the composite nonwoven textile. The term "entangled web of fibers" when referring to the composite nonwoven textile refers to a web of fibers after it has undergone mechanical entanglement with one or more other webs of fibers. As such, a web of entangled fibers may include fibers originally present in the web of fibers forming the layer as well as fibers that are present in other webs of fibers that have been moved through the entanglement process into the web of entangled fibers. The term "interior layer" as used herein refers to a layer of the nonwoven textile that is positioned between at least two other layers of the nonwoven textile. The term "printed layer" as used herein refers to a layer of the composite nonwoven textile that includes a printed component.

In example aspects, the printed layer is arranged such that it is positioned interior to an outermost web of fibers (e.g., the first web of fibers) or layer in the printed composite nonwoven textile. Such aspects contemplate that the printed layer and in turn, the printed component are less exposed or unexposed to an external environment. As a result, the printed layer and the printed component are less susceptible to wear and tear and abrasion. In further example aspects, an arrangement of the printed layer at an interior layer may also aid in securing the printed layer in place in the printed composite nonwoven textile. Moreover, features of the printed layer may result in less entanglement than other webs of fibers and/or layers of the printed composite nonwoven textile. As such, positioning the printed layer between two webs of fibers and/or layers such that it is an interior layer of the printed composite nonwoven textile may provide more entanglement for the printed layer than if it were positioned as an exterior layer or outermost layer of the printed composite nonwoven textile.

The mechanical entanglement process contemplated herein may include needle entanglement (commonly known as needlepunching) using barbed or structured needles (e.g., forked needles), or fluid entanglement. In aspects contemplated herein, needlepunching may be used due to the small denier of the fibers being used and the ability to fine tune different parameters associated with the needlepunching process. Needlepunching generally uses barbed or spiked needles to reposition a percentage of fibers from a generally horizontal orientation (an orientation extending along an x, y plane) to a generally vertical orientation (a z-direction orientation). Referring to the needlepunching process in general, the carded, lapped, and pre-needled webs may be stacked with other carded, lapped, and pre-needled webs and passed between a bed plate and a stripper plate positioned on opposing sides of the stacked web configuration. Barbed needles, which are fixed to a needle board, pass in and out through the stacked web configuration, and the stripper plate strips the fibers from the needles after the needles have moved in and out of the stacked web configuration. The distance between the stripper plate and the bed plate may be adjusted to control web compression during needling. The needle board repeatedly engages and disengages from the stacked web configuration as the stacked web configuration is moved in a machine direction along a conveyance system such that the length of the stacked web configuration is needled. Aspects herein contemplate using multiple needle boards sequentially positioned at different points along the conveyance system where different needle boards may engage the stacked web configuration from different faces of the stacked web configuration (e.g., an upper face and a lower face) as the stacked web configuration moves in the machine direction. Each engagement of a needle board with the stacked web configuration is known herein as a "pass." Parameters associated with particular needle boards may be adjusted to achieve desired properties of the resulting needled nonwoven textile (e.g., basis weight, thickness, and the like). The different parameters may include stitch density (SD) which is the number of needles per cm² (n/cm²) used during an entanglement pass and penetration depth (PD) which is how far the needle passes through the stacked web configuration before being pulled out of the stacked web configuration. Parameters associated with the needlepunching process in general may also be adjusted such as the spacing between the bed plate and the stripper plate and the speed of conveyance of the stacked web configuration.

Aspects herein contemplate using barbed needle (a needle having barbs arranged along a length of the needle) although other needle types are contemplated herein. The barbs on the needle "capture" fibers as the barb moves from a first face to an opposing second face of the stacked web configuration. The movement of the needle through the stacked web configuration effectively moves or pushes fibers captured by the barbs from a location near or at the first facing side to a location near or at the second facing side and further causes physical interactions with other fibers helping to "lock" the moved fibers into place through, for example, friction. It is also contemplated herein that the needles may pass through the stacked web configuration from the second facing side toward the first facing side. In example aspects, the number of barbs on the needle that interact with fibers may be based on the penetration depth of the needle. For example, all barbs may interact with fibers when the penetration depth is a first amount, and fewer than all barbs may interact with fibers as the penetration depth decreases. In further example aspects, the size of the barb may be adjusted based on the denier of fibers used in the web(s). For example, the barb size may be selected so as to engage with small denier (e.g. fine) fibers but not with large denier fibers so as to cause selective movement of the small denier fibers but not the large denier fibers. In another example, the barb size may be selected so as to engage with both small denier and large denier fibers so as to cause movements of both fibers through the webs.

After entanglement, the nonwoven textile may include a first facing side and an opposite second facing side which both face outward with respect to an interior of the nonwoven textile and comprise the outermost faces of the nonwoven textile. As such, when viewing the nonwoven textile, the first facing side and the second facing side are each fully visible. The first facing side and the second facing side may both extend along x, y planes that are generally parallel and offset from each other.

The term "elastomeric layer" as used herein refers to a layer that has stretch and recovery properties (i.e., is elastically resilient) in at least one orientational axis, which includes both a layer having stretch and recovery in a single orientational axis and a layer having stretch and recovery in multiple orientational axes. Examples of an orientational axis include a length direction, a width direction, an x-direction, a y-direction, and any direction angularly offset from a length direction, a width direction, an x-direction, and a y-direction. The elastomeric layer may be formed from thermoplastic elastomers such as thermoplastic polyurethane (TPU), thermoplastic polyether ester elastomer (TPEE), combinations of TPU and TPEE and the like. The elastomeric layer may comprise a spunbond layer, a film, a web, and the like. In example aspects, the elastomeric layer may include a spunbond TPEE or a meltblown TPU. Nonwoven elastomeric materials such a spunbond TPEE or a meltblown TPU allow for lower basis weights than elastomeric films. As well, they are generally more breathable and permeable due to the fibrous nature of the web versus a film, and they are generally more pliable (i.e., less stiff) than films. These factors (low basis weight, breathable and permeable, pliable) make them ideal for use in the example composite nonwoven textile described herein especially in the apparel context where these are desirable features.

When referring to fibers, the term denier or denier per fiber is a unit of measure for the linear mass density of the fiber and more particularly, it is the mass in grams per 9000 meters of the fiber. In one example aspect, the denier of a fiber may be measured using ASTM D1577-07. The diameter of a fiber may be calculated based on the fiber's denier and the fiber's density. Fibers contemplated herein may be formed of a number of different materials (e.g., cotton, nylon and the like) including polyethylene terephthalate (PET) commonly known as polyester. The PET fibers may include virgin PET fibers (fibers that have not been recycled), and recycled PET fibers. Recycled PET fibers include shredded PET fibers derived from shredded articles and re - extruded PET fibers (fibers that are re-extruded using recycled PET chips). In further aspects, fibers contemplate herein may be configured to afford hydrophobic properties to the printed composite nonwoven textile.

The term "silicone-coated fiber" as used herein may mean a fiber having a continuous silicone coating such that the silicone coating completely covers the fiber along its length. In one example, the fiber may form a core and the silicone may form a sheath surrounding the core. In other example aspects, the term "silicone-coated fiber" may mean a fiber that has an intermittent coating of silicone in at least some areas along the length of the fiber. For instance, the fiber may be sprayed with a silicone coating. In this aspect, if a particular web of fibers includes 100% by weight of silicone-coated fibers, it is contemplated herein that the fibers that form the web may have areas that do not include the silicone coating. It is contemplated herein that the silicone-coated fibers are incorporated into the webs of fibers that form the composite nonwoven textile. Said differently, the silicone coating on the fibers is not applied to the fibers after the composite nonwoven textile if formed using, for example, a silicone spray finish.

The term "color" or "color property" as used herein when referring to the nonwoven textile generally refers to an observable color of fibers that form the textile. Such aspects contemplate that a color may be any color that may be afforded to fibers using dyes, pigments, and/or colorants that are known in the art. As such, fibers may be configured to have a color including, but not limited to red, orange, yellow, green, blue, indigo, violet, white, bl ack, and shades thereof. In one example aspect, the color may be imparted to the fiber when the fiber is formed (commonly known as dope dyeing). In dope dyeing, the color is added to the fiber as it is being extruded such that the color is integral to the fiber and is not added to the fiber in a post-formation step (e.g., through a piece dyeing step).

Aspects related to a color further contemplate determining if one color is different from another color and if one color is substantially the same as another color. In these aspects, a color may comprise a numerical color value, which may be determined by using instruments that objectively measure and/or calculate color values of a color of an object by standardizing and/or quantifying factors that may affect a perception of a color. Such instruments include, but are not limited to colorimeters, spectroradiometers, spectrophotometers, and the like. Thus, aspects herein contemplate that a "color" of a textile provided by fibers may comprise a numerical color value that is measured and/or calculated using colorimeters, spectroradiometers, and/or spectrophotometers. Moreover, numerical color values may be associated with a color space or color model, which is a specific organization of colors that provides color representations for numerical color values, and thus, each numerical color value corresponds to a singular color represented in the color space or color model.

Such a determination may be made by measuring and/or calculating a numerical color value of, for instance, a first textile having a first color with a colorimeter, spectroradiometer or a spectrophotometer, measuring and/or calculating a numerical color value of a second textile having a second color with the same instrument (i.e., if a spectrophotometer was used to measure the numerical color value of the first color, then a spectrophotometer is used to measure the numerical color value of the second color), and comparing the numerical color value of the first color with the numerical color value of the second color. In another example, the determination may be made by measuring and/or calculating a numerical color value of a first area of a textile with a colorimeter, spectroradiometer, or a spectrophotometer, measuring and/or calculating a numerical color value of a second area of the textile having a second color with the same instrument, and comparing the numerical color value of the first color with the numerical color value of the second color. If the numerical color values are not equal, then the first color or the first color property is different than the second color or the second color property, and vice versa.

Further, it is also contemplated that a visual distinction between two colors may correlate with a percentage difference between the numerical color values of the first color and the second color, and the visual distinction will be greater as the percentage difference between the color values increases. Moreover, a visual distinction may be based on a comparison between colors representations of the color values in a color space or model. For instance, when a first color has a numerical color value that corresponds to a represented color that is black or navy and a second color has a numerical color value that corresponds to a represented color that is red or yellow, a visual distinction between the first color and the second color is greater than a visual distinction between a first color with a represented color that is red and a second color with a represented color that is yellow.

The term "translucency" relates to a transmission of light, and "translucent" refers to a physical property of an object when a light strikes its surface in which some of the light is passed or transmitted through the object and some of the light is diffused, reflected, and/or absorbed. Thus, the term "translucent" when describing a web of fibers and/or one or more additional layers of the printed composite nonwoven textile means a web of fibers or a layer through which light partially passes through. Further, when a web of fibers or a layer is referred to herein as "at least partially" translucent, it is to be understood that "at least partially" refers to a portion, area, region, or location of the web of fibers or the layer at which the web of fibers or the layer is translucent and is not referring to a transmittance thereof. For instance, a web of fibers or a layer of the printed composite nonwoven textile that is at least partially translucent means that at some portion, area, region, or location of the layer light partially passes through. In another instance, a web of fibers or a layer that is at least partially translucent means that at one or more portions of the web of fibers or the layer, light partially passes through and at other, different portions of the web of fibers or the layer, light may or may not partially pass through.

The term "printing technique" as used herein generally refers to a process of applying a colored substance to a substrate (e.g., an interior layer of the printed nonwoven composite textile) and includes any printing process, technique, or method known by those skilled in the art. Generally, the colored substance may be a colorant, a sublimation dye, or both, and the colorant and the sublimation dye may be configured to have a color including, but not limited to red, orange, yellow, green, blue, indigo, violet, white, black, and shades thereof. As such, in example aspects, printing techniques contemplated herein include direct printing techniques in which one or more colorants are transferred to a substrate, and examples of direct printing techniques include screen printing, rotary printing, digital printing, and the like. The term "colorant" as used herein generally refers to any ink, pigment, dye, or other substance that colors something and may include a wide range of inks, pigments, or dyes that are compatible with at least one direct printing technique discussed herein. In one example aspect, the colorant may include commercially available inks that are known by those having ordinary skill in the art or proprietary inks to be used with digital printing techniques. Such inks may be water-based or oil-based and may include, but are not limited to cracking ink, discharge ink, glitter or shimmer ink, gloss ink, metallic ink, mirrored silver ink, plastisol ink, polyvinyl chloride ink (PVC -ink), non-PVC-ink, phthalate ink, non-phthalate ink, acrylic ink, suede ink, oil-based acrylic ink, polyurethane ink, high density ink, solvent ink, ultraviolet ink, and combinations thereof. Notwithstanding, it is also contemplated that an ink may include specialty inks, which may have one or more properties that are not typically included in commercially available inks. Such properties may include a visual characteristic that may give a specialty ink a metallic, pearlescent, color shift, or reflective appearance. Moreover, any of these inks may include additives, which may affect certain properties or components of an ink or may afford an ink additional properties or components. For example, an additive may cause an ink to be more compatible with certain inks and materials, and thus, an additive may be used to promote compatibility between an ink and a face of a layer of the nonwoven textile.

In other example aspects, printing techniques contemplated herein include sublimation printing techniques. The term "sublimation printing process" as used herein refers to a printing technique that utilizes heat and pressure to apply dyes to a substrate. Generally, a sublimation printing process may apply one or more sublimation dyes, which may have an affinity to a substrate (e.g., the interior layer of the nonwoven textile) and is applied thereto via sublimation printing. Sublimation dyes may include coloring agents derived from plant or synthetic sources that may be finely ground and included with a dispersing agent, and the sublimation dye may infuse into a substrate at the molecular level and impregnate color into a material. As understood by those skilled in the art, sublimation printing utilizes the science of sublimation, in which heat is applied to a solid, turning it into a gas through an endothermic reaction without passing through the liquid phase.

Sublimation printing may include solid, heat-sensitive dyes, dissolved in a liquid that, when under heat and pressure, change into gas, bond with a compatible substrate, and then change back into a solid. As a result, sublimation dyes are infused into a substrate at the molecular level. Further, sublimation printing processes contemplated herein may utilize a variety of components and techniques to apply a sublimation dye to a substrate (e.g., an interior layer of the nonwoven textile), and different sublimation printing processes may include similar and/or different aspects. For instance, one process may apply a sublimation dye directly to a substrate, while another process may use a transfer sheet. Moreover, some sublimation printing techniques may include a sublimation printer and/or may also use heat or energy to cause absorption of a sublimation dye to a substrate. In one non-limiting example, one or more sublimation dyes may be transferred to the interior layer by using a heat press to subject the interior layer and the one or more sublimation dyes applied thereto to a temperature of about 195 °C for about 1 second. As a result, the one or more sublimation dyes are transferred to the interior layer and are absorbed by at least a portion of the interior layer. In other aspects, the one or more sublimation dyes may be transferred to the interior layer by using a heat press to subject the interior layer and the one or more sublimation dyes applied thereto to a temperature of from about 225°C to about 165 °C, from about 220 °C to about 170 °C , from about 215 °C to about 175 °C , from about 210 °C to about 180 °C, from about 205 °C to about 185 °C, from about 200 °C to about 190 °C, or about 195 °C for a time of for about 30 second, for about 25 seconds, for about 20 seconds, for about 15 seconds, for about 10 seconds for about 5 seconds. As used herein, the term "about" means generally within ± 10% of an indicated value.

The term "printed component" as used herein means an image, graphic, design or visual indicia formed on a layer by one or more colorants or sublimation dyes that were applied to the layer via a printing technique in accordance with aspects herein. Moreover, the printed component may also include shapes including shapes associated with branding such as logos, images and the like, geometric shapes, organic shapes, patterns, letters, numbers, and the like. Further, the printed component may be formed, at least in part, by one or more colors afforded by one or more colorants or sublimation dyes, which may be configured to be of any color including, but not limited to red, orange, yellow, green, blue, indigo, violet, shades thereof.

Further aspects herein are directed to debossed and pleated finishes for composite nonwoven textiles suitable for apparel and other articles and methods for producing the same. At a high level, a composite nonwoven textile may include a first region comprising a first entangled web of fibers, a second entangled web of fibers, and an elastomeric layer positioned between the first entangled web of fibers and the second entangled web of fibers. The composite nonwoven textile may also include a second region comprising a debossed portion and the second entangled web of fibers, the debossed portion comprising a plurality of fibers from the first entangled web of fibers integrated within the elastomeric layer.

Continuing at a high level, a pleated construction may include a composite nonwoven textile comprising a first entangled web of fibers, a second entangled web of fibers, and an elastomeric layer positioned between the first entangled web of fibers and the second entangled web of fibers. The pleated construction may also include an elastically resilient structured textile positioned adjacent an outermost surface of the second entangled web of fibers and may further include a plurality of pleats formed from the composite nonwoven textile and the elastically resilient structured textile.

Various measurements are provided herein with respect to the pre-entangled webs and the resulting composite nonwoven textile. Thickness of the resulting composite nonwoven may be measured using a precision thickness gauge. To measure thickness, for example, the textile may be positioned on a flat anvil and a pressure foot is pressed on to it from the upper surface under a standard fixed load. A dial indicator on the precision thickness gauge gives an indication of the thickness in mm. Basis weight is measured using ISO3801 testing standard and has the units grams per square meter (gsm). Textile stiffness, which generally corresponds to drape is measured using ASTMD4032 (2008) testing standard and has the units kilogram force (Kgf). Fabric growth and recovery is measured using ASTM2594 testing standard and is expressed as a percentage. The term "stretch" as used herein means a textile characteristic measured as an increase of a specified distance under a prescribed tension and is generally expressed as a percentage of the original benchmark distance (i.e., the resting length or width). The term "growth" as used herein means an increase in distance of a specified benchmark (i.e., the resting length or width) after extension to a prescribed tension for a time interval followed by the release of tension and is usually expressed as a percentage of the original benchmark distance. "Recovery" as used herein means the ability of a textile to return to its original benchmark distance (i.e., its resting length or width) and is expressed as a percentage of the original benchmark distance. Thermal resistance, which generally corresponds to insulation features, is measured using ISO11092 testing standard and has the units of RCT (M² * K/W).

Unless otherwise noted, all measurements provided herein are measured at standard ambient temperature and pressure (25 degrees Celsius or 298.15 K and 1 bar) with the nonwoven textile in a resting (un-stretched) state.

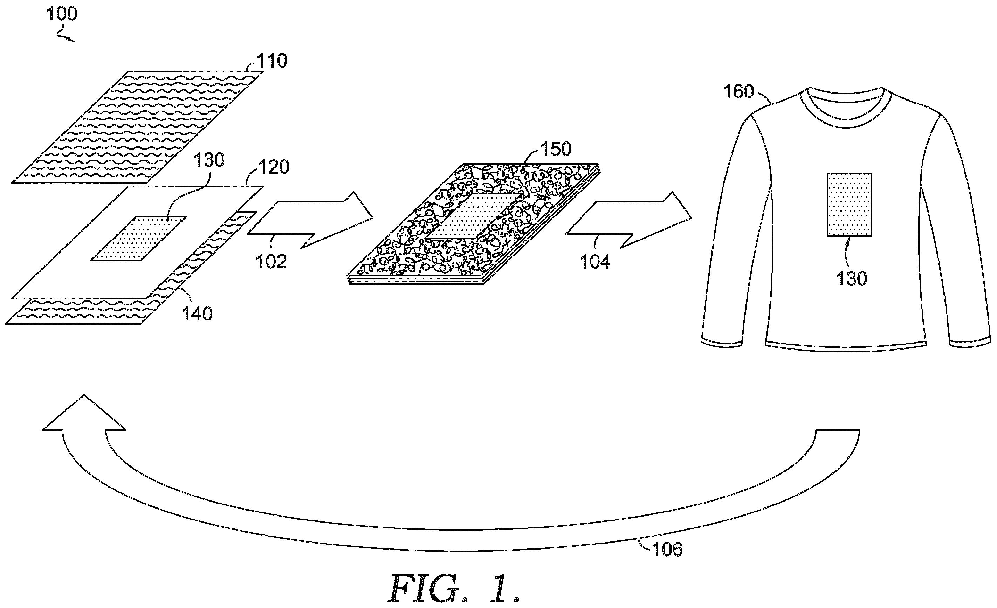

FIG. 1 is a schematic depiction of an example lifecycle for the composite nonwoven textile contemplated herein. Reference numeral 100 indicates a first web of fibers 110, an interior layer 120 having a printed component 130 (e.g., a printed layer), and one or more additional layers 140 prior to entanglement (e.g., a second web of fibers, a third web of fibers, and/or an elastomeric layer). It is contemplated herein that, in some example aspects, any of the one or more additional layers 140 may be optional. In example aspects, the fibers used to form the first web of fibers 110, the interior layer 120, and the one or more additional layers 140 may include recycled fibers and, in particular, recycled PET fibers. Additionally, when the one or more additional layers 140 includes an elastomeric layer, example aspects herein contemplate that the elastomeric layer may be formed of a material that is recyclable. Arrow 102 schematically represents an entanglement step where the fibers in the first web of fibers 110, the interior layer 120, and/or the one or more additional layers 140 are entangled with each other such that one or more of the fibers extend into another layer and form a cohesive, printed composite nonwoven textile 150. Arrow 104 schematically represents a processing step where the printed composite nonwoven textile 150 is formed into an article of apparel 160 that includes the printed component 130. Although the article of apparel 160 is shown as an upper body garment, it is contemplated herein that the article of apparel 160 may take other forms such as a lower body garment, an upper of a shoe, a hat, gloves, sleeves, and the like. At the end of the life of the article of apparel 160, it is contemplated that a wearer may return the article of apparel 160 to, for example, the manufacturer/retailor where the article of apparel 160 may be fully recycled as indicated by arrow 106 to form shredded fibers and/or re-extruded fibers that are used to form webs of fibers such as the first web of fibers 110, the interior layer 120, and/or the one or more additional layers 140 thus creating a self-sustaining loop. This self-sustaining loop reduces the carbon impact typically associated with creating printed articles of apparel including knit, woven, and nonwoven articles of apparel.

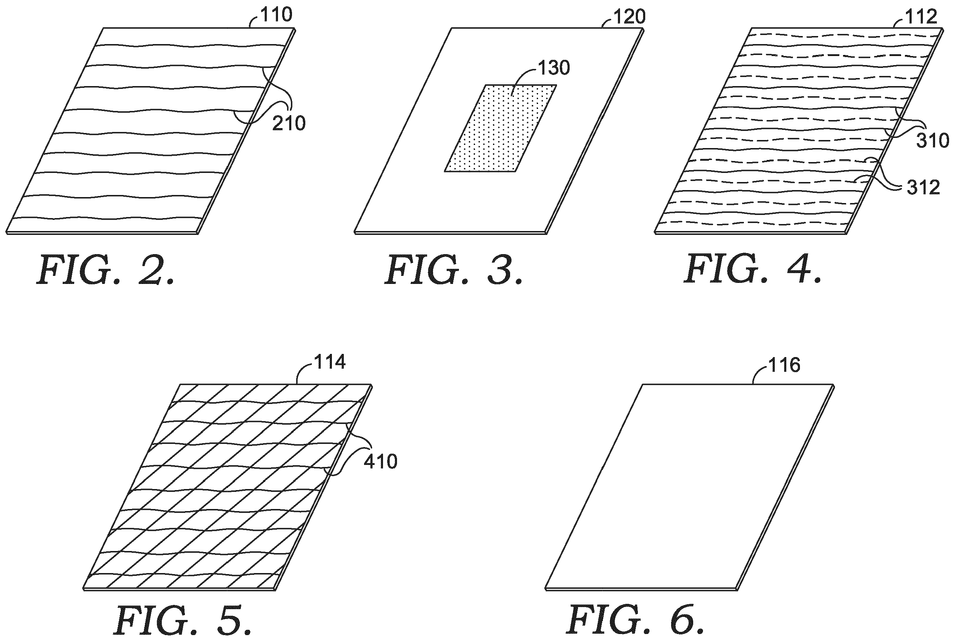

FIG. 2 depicts the first web of fibers 110 prior to being entangled with other webs and/or layered with other layers. In example aspects, properties associated with the first web of fibers 110 may be selected to achieve desired end properties for the printed composite nonwoven textile 150. As discussed above, when entangled with other webs and/or layered with other layers, it is contemplated herein that the first web of fibers 110 forms a first facing side of the printed composite nonwoven textile 150. When the printed composite nonwoven textile 150 is formed into an article of apparel, it is contemplated that the first facing side forms an outer-facing surface, and in some aspects an outermost-facing surface of the article of apparel. As such, desired properties associated with the first web of fibers 110 include, for example, durability and resistance to abrasion and coverage for modesty. In example aspects, the first web of fibers 110 has a basis weight of from about 20 grams per square meter (gsm) to about 150 gsm, from about 35 gsm to about 65 gsm, from about 40 gsm to about 60 gsm, from about 45 gsm to about 55 gsm, or about 50 gsm. Targeting a basis weight in this range for the first web of fibers 110 provides for a resulting nonwoven textile having a basis weight in a desired range after the first web of fibers 110 is combined with other webs and/or layers.

The first web of fibers 110 is formed of fibers, such as fibers 210 (depicted schematically) that may be oriented generally in a common direction due to a carding and cross - lapping process. In example aspects, the fibers 210 may include PET fibers (recycled or virgin) although other virgin and recycled fiber types are contemplated herein (e.g., polyamide, cotton, and the like). In one example aspect, the fibers 210 may include 100% by weight of recycled fibers such as 100% by weight of recycled PET fibers. However, in other aspects, the fibers 210 may include 100% by weight virgin fibers, or other combinations of virgin and recycled fibers, as desired. The staple length of the fibers 210 may range from about 40 mm to about 60 mm, from about 45 mm to about 55 mm, or about 51 mm. Use of this fiber length provides optimal entanglement. For instance, when below 40 mm, the fibers may not have sufficient length to become entangled, and when above 60 mm, the fibers may actually become un -entangled when the needle is withdrawn from the nonwoven textile during entanglement. In example aspects, the fibers 210 may comprise a uniform length such as when the fibers are formed from virgin extruded PET or re-extruded PET and cut to a defined length. In other aspects, the fibers 210 may include a variation of staple length such as when the fibers 210 are derived from a shredded fiber source. Any and all aspects, and any variation thereof, are contemplated as being within aspects herein.

The fibers 210 may include a denier of greater than or equal to about 1.2 D, or from about 1.2 D to about 3.5 D, from about 1.2 D to about 1.7 D, from about 1.3 D to about 1.6 D, or about 1.5 D. Utilizing a denier within this range makes the fibers 210 less susceptible to breakage which, in turn, enhances the durability and abrasion resistance of the first facing side of the printed composite nonwoven textile 150. Moreover, selecting a denier within this range while still achieving the basis weight of the first web of fibers 110 provides good, uniform coverage of the first facing side which helps enhance the durability features of the first facing side. Selecting a denier of greater than, for instance 3.5 D while still maintaining the basis weight for the first web of fibers 110 may provide less coverage for the first facing side which may be desirable in some instances such as when it is desired to expose, or at least partially expose, the printed component.

In example aspects, the fibers 210 used to form the first web of fibers 110 may include a first color property. The first color property may be imparted to the fibers 210 during, for example, the extrusion process when the fibers 210 are being formed such that the fibers 210 are dope dyed. In one example aspect, the color property may be white although other colors are contemplated herein. Forming the printed composite nonwoven textile 150 using dope dyed fibers eliminates post-formation dyeing steps which further helps to reduce the carbon footprint of the printed composite nonwoven textile 150. In another example aspect, the fibers 210 may be configured such that the first web of fibers 110 is at least partially translucent. That is, the first web of fibers 110, pre-entanglement or post-entanglement, are such that the printed component 130 of the interior layer 120 of the printed composite nonwoven textile 150 is, at least in part, visible on the first facing side, through the first web of fibers 110.

FIG. 3 depicts the interior layer 120 having the printed component 130 prior to being entangled and/or layered with other webs and/or layers. In example aspects, properties associated with the interior layer 120 may be selected to achieve desired end properties of the printed component 130 and/or the printed composite nonwoven textile 150. Generally, the interior layer 120 may be configured such that it is compatible with at least one printing technique contemplated herein and is capable of including the printed component 130 with desirable aesthetic properties. In one example, the interior layer 120 has a first color property that is white and at least one face that is suitable for receiving one or more colored substances, which collectively form the printed component 130. In example aspects, the interior layer 120 may be a web of fibers formed of fibers having any selection of features related to fibers contemplated herein. In other example aspects, the interior layer 120 is a spunlace layer that has features configured for providing desired aesthetic properties to the printed component 130. Additional aspects related to the interior layer 120 are discussed with more detail below.

FIGS. 4-6 each depict an example web of fibers or an example layer that may be included in the one or more additional layers 140 of the printed composite nonwoven textile 150. FIG. 3 depicts a second web of fibers 112 prior to being entangled with other webs and/or layered with other layers. In example aspects, properties associated with the second web of fibers 112 may be selected to achieve desired end properties for the printed composite nonwoven textile 150. As discussed above, when entangled with other webs, it is contemplated herein that the second web of fibers 112 forms an opposite second facing side of the printed composite nonwoven textile 150. When the printed composite nonwoven textile 150 is formed into an article of apparel, it is contemplated herein that the second facing side forms an inner-facing surface, and in some aspects an innermost-facing surface of the article of apparel. As such, properties associated with the second web of fibers 112 include, for example, a soft hand or feel. In example aspects, the second web of fibers 112 has a basis weight of from about 20 gsm to about 150 gsm, from about 35 grams per square meter (gsm) to about 65 gsm, from about 40 gsm to about 60 gsm, from about 45 gsm to about 55 gsm, or about 50 gsm. In example aspects, the second web of fibers 112 has generally the same basis weight as the first web of fibers 110. Targeting a basis weight in this range for the second web of fibers 112 provides for a resulting nonwoven textile having a basis weight in a desired range after the second web of fibers 112 is combined with other webs and/or layered with other layers.

The second web of fibers 112 may be formed of two types of fibers, such as fibers 310 (depicted schematically) and fibers 312 (depicted schematically) that may be oriented generally in a common direction due to a carding and cross-lapping process. In example aspects, the fibers 310 may include PET fibers (recycled or virgin) although other virgin and recycled fiber types are contemplated herein (e.g., polyamide, cotton, and the like). In one example aspect, the fibers 310 may include 100% by weight of recycled fibers such as 100% by weight of recycled PET fibers. However, in other aspects, the fibers 310 may include 100% by weight virgin fibers, or other combinations of virgin and recycled fibers, as desired.

The fibers 312 are shown in dashed line to indicate that they have different features than the fibers 310. For example, the fibers 312 include silicone-coated fibers. The fibers 312 may be coated with silicone prior to incorporating the fibers 312 into the second web of fibers 112. In example aspects, the second web of fibers 312 may include about 10% to about 100% by weight of the fibers 312, about 40% by weight of the fibers 310 and about 60% by weight of the fibers 312, about 45% by weight of the fibers 310 and about 55% by weight of the fibers 312, about 50% by weight of the fibers 310 and about 50% by weight of the fibers 312, about 55% by weight of the fibers 310 and about 45% by weight of the fibers 312, or about 60% by weight of the fibers 310 and about 40% by weight of the fibers 312. When stating that the seco nd web of fibers 112 may include about 100% by weight of the fibers 312, it is contemplated herein that the fibers 312 may be intermittently coated with silicone along their length. Utilizing the fibers 310 and the fibers 312 in the ranges above provides a good hand feel to the second face formed by the second web of fibers 112. It also provides a good drape to the printed composite nonwoven textile 150. Stated differently, the resulting printed composite nonwoven textile 150 is not as stiff as traditional nonwovens used in the cleaning space and the personal hygiene space. Further, utilizing the fibers 310 and the fibers 312 in the ranges above may reduce the amount of needle force needed to entangle the web of fibers described herein since the silicone -coated fibers may move more easily during the entanglement process. When incorporating silicone-coated fibers below the ranges described above, the second facing side may feel dry and uncomfortable during wear. Conversely, when incorporating silicone-coated fibers above the ranges described above, the second facing side may feel slick which also may be unpleasant to a wearer. Moreover, using silicone-coated fibers above the ranges described above may make the carding process difficult since the card wires may not be able to frictionally engage with the fibers to achieve a uniform carded web. In addition, using silicone-coated fibers above the ranges described above may also fail to create adequate entanglement between the fibers since frictional forces are reduced due to the silicone thus impacting the structural integrity of the printed composite nonwoven textile 150.

Utilizing the silicone-coated fibers 312 eliminates the need for adding a silicone finish to the printed composite nonwoven textile 150 in a post-processing step. As known in the textile space, it is common practice to add silicone softener finishes to knitted or woven products in a post-processing step. By eliminating this step, the carbon footprint of the printed composite nonwoven textile 150 is further reduced.

The staple length of each of the fibers 310 and 312 may range from about 40 mm to about 60 mm, from about 45 mm to about 55 mm, or about 51 mm. Similar to the fibers 210, this length may provide for optimal entanglement. In example aspects, the fibers 310 and/or 312 may comprise a uniform length such as when the fibers are formed from virgin extruded PET or re-extruded PET and cut to a defined length. In other aspects, the fibers 310 and/or 312 may include a variation of staple length such as when the fibers 310 and/or 312 are derived from a shredded fiber source. Any and all aspects, and any variation thereof, are contemplated as being within aspects herein.

Each of the fibers 310 and 312 may include a denier of less than or equal to about 1 D. For example, the denier may be about 0.1 D, about 0.2 D, about 0.3 D, about 0.4 D, about 0.5 D, about 0.6 D, about 0.7 D, about 0.8 D, or about 0.9 D. In example aspects, the denier of the fibers 310 and 312 may be from about 0.6 D to about 1 D, from about 0.7 D to about 0.9 D, **or** about 0.8 D. Utilizing a denier within this range helps to provide a soft feel or hand to the second facing side formed from the second web of fibers 112. Moreover, selecting a denier within this range while still achieving the basis weight of the second web of fibers 112 provides good coverage of the second facing side.

In example aspects, each of the fibers 310 and 312 used to form the second web of fibers 112 may include a color property which may the same or different. In example aspects, both of the fibers 310 and 312 include the first color property of the fibers 210. Similar to the fibers 210, each of the fibers 310 and 312 may be dope dyed further reducing the need for post - processing dyeing steps for the resulting composite nonwoven textile.

FIG. 5 depicts an optional third web of fibers 114 prior to being entangled with other webs and/or layered with other layers. When incorporated into the printed composite nonwoven textile 150 as part of the one or more additional layers 140, it is contemplated herein that the third web of fibers 114 is positioned between the first web of fibers 110 and the second web of fibers 112. In example aspects, properties associated with the third web of fibers 114 may be selected to achieve desired end properties for the printed composite nonwoven textile 150. In example aspects, the third web of fibers 114 may be incorporated into the printed composite nonwoven textile 150 to achieve a desired basis weight for the printed composite nonwoven textile 150, to achieve a desired thickness for the printed composite nonwoven textile 150, to achieve a desired insulation property for the printed composite nonwoven textile 150, to achieve a desired pile for the printed composite nonwoven textile 150, and the like. As explained further below, to impart a visual aesthetic to the printed composite nonwoven textile 150, fibers forming the third web of fibers 114 may having a different color property than fibers used to form the first web of fibers 110 and the second web of fibers 112. Similar to the first web of fibers 110 and the second web of fibers 112, the third web of fibers 114 has a basis weight of from 20 gsm to about 150 gsm, from about 35 grams per square meter (gsm) to about 65 gsm, from about 40 gsm to about 60 gsm, from about 45 gsm to about 55 gsm, or about 50 gsm. Targeting a basis weight in this range for the third web of fibers 110 provides for a resulting nonwoven textile having a basis weight in a desired range after the third web of fibers 114 is combined with other webs and/or layers.

The third web of fibers 114 is formed of fibers, such as fibers 410 (depicted schematically) that may be oriented generally in a common direction due to a carding and cross - lapping process. In example aspects, the fibers 410 may include PET fibers (recycled or virgin) although other virgin and recycled fiber types are contemplated herein (e.g., polyamide, cotton, and the like). In one example aspect, the fibers 410 may include 100% by weight of recycled fibers such as 100% by weight of recycled PET fibers. However, in other aspects, the fibers 410 may include 100% by weight virgin fibers, or other combinations of virgin and recycled fibers, as desired. Similar to the fibers 210, 310 and 312, the staple length of the fibers 410 may range from about 40 mm to about 60 mm, from about 45 mm to about 55 mm, or about 51 mm. In example aspects, the fibers 410 may comprise a uniform length such as when the fibers are formed from virgin extruded PET or re-extruded PET and cut to a defined length. In other aspects, the fibers 410 may include a variation of staple length such as when the fibers 410 are derived from a shredded fiber source. Any and all aspects, and any variation thereof, are contemplated as being within aspects herein.

The fibers 410 may include a denier of greater than or equal to about 1.2, from about 1.2 D to about 3.5 D, from about 1.3 D to about 1.6 D, or about 1.5 D. Utilizing a denier within this range makes the fibers 410 less susceptible to breakage which, in turn, enhances the durability and abrasion resistance of the printed composite nonwoven textile 150. Since the third web of fibers 114, when used, is positioned between the first web of fibers 110 and the second web of fibers 112, having a soft hand is not as important as, for example, the second web of fibers 112. Selecting a denier within this range while still achieving the basis weight of the third web of fibers 114 enhances the overall coverage and/or opacity of the printed composite nonwoven textile 150.

In some aspects, the fibers 410 used to form the third web of fibers 114 may include a second color property different from the first color property. This is depicted in FIG. 4 through the use of diagonal shading lines. It is contemplated herein that the fibers 410 are dope dyed further reducing the carbon footprint of the printed composite nonwoven textile 150. As will be explained in greater detail below, during the entanglement of the first, second, and third webs of fibers 110, 112 and 114, the fibers 410 may be moved more toward one facing side than the other facing side such that the second color property is visually discernible or distinguishable to a greater degree on the one facing side compared to the other facing side. It is contemplat ed herein that the fibers 210 of the first web of fibers 110, the fibers 310 of the second web of fibers 112, and the fibers 410 of the third web of fibers 114 are not coated with silicone.

FIG. 6 depicts an elastomeric layer 116 that may be included as part of the one or more additional layers 140. In example aspects, the elastomeric layer 116 may have a basis weight from about 20 gsm to about 150 gsm, from about 50 gsm to about 70 gsm, from about 55 gsm to about 65 gsm, or about 60 gsm. The basis weight of the elastomeric layer 116 may be selected to achieve a desired basis weight for the resulting printed composite nonwoven textile. Aspects herein contemplate forming the elastomeric layer 116 from a thermoplastic elastomer such as a thermoplastic polyurethane (TPU), a thermoplastic polyether ester elastomer (TPEEE), combinations of TPU and TPEEE, and the like. The elastomeric layer may include a spunbond layer, a film, a web, and the like. In a particular example aspect, the elastomeric layer 116 may comprise a TPEE spunbond layer. In some example aspects, it has been found that a spunbond layer better withstands the needling process while maintaining stretch and recovery properties compared to, for example, films. In general, the elastomeric layer 116 is selected to provide desirable stretch and recovery properties to the printed composite nonwoven textile 150 while generally maintaining structural integrity during the entanglement process. It is contemplated herein that the elastomeric layer 116 has a color property. In example aspects, the color property may be the first color property associated with the fibers 210, 310, and 312, although other color properties are contemplated herein.

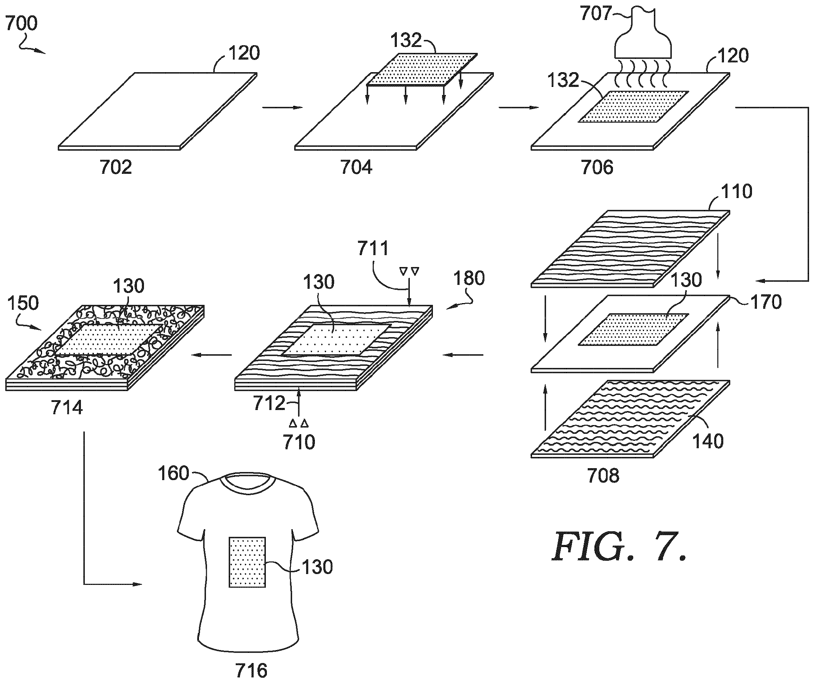

FIG. 7 illustrates an example manufacturing process, referenced generally by the numeral 700, for use in making the example printed composite nonwoven textile 150 and for incorporating the same into the article of apparel 160. The depiction of the manufacturing components in FIG. 7 is illustrative only and is meant to convey general features of individual steps of the manufacturing process 700. In addition, while the steps are depicted as being performed in a sequential order, aspects herein contemplate that the manufacturing process 700 may include any combination of one or more steps, any of which may be repeated or performed in a different order than as depicted. At a high level, FIG. 7 depicts several individual steps of the manufacturing process 700 that include utilizing a printing technique to form the printed component 130 on the interior layer 120 to form a printed layer 170, positioning a first face of the printed layer 170 adjacent to a second face of the first web of fibers 110 to form a composite structure 180, subjecting the composite structure 180 to an entanglement process to form the printed composite nonwoven textile 150, and incorporating the printed composite nonwoven textile 150 into the article of apparel 160.

Beginning with a step 702, the interior layer 120 is obtained and/or provided. At a step 704, a printing technique is utilized to form the printed component 130, which is generically depicted as a colored substance 132 being applied to a first face of the interior layer 130. A step 706 depicts an optional and/or additional step related to the utilized printing technique, and in this example, the step 706 generically depicts a curing process in which the applied colored substance 132 and the interior layer 120 are subjected to heat generated by a heat source 707. At a step 708, the first face of the printed layer 170 is positioned adjacent to the second face of the first web of fibers 110, and in an optional sub-step, an opposite second face of the printed layer 170 is positioned adjacent to a first face of the one or more additional layers 140. The first web of fibers 110 and the printed layer 170 form the composite structure 180, which may optionally include the one or more additional layers 140. A step 710 generically depicts subjecting the composite structure 180 to an entanglement process that includes a first condition 711 and a second condition 712. In an example aspect, the first condition 711 is a first pass of needlepunching associated with a first set of parameters, and the second condition 712 is a second pass of needlepunching associated with a second set of parameters. The conditions 711 and 712 are illustrative only and it is contemplated herein than more or less needle passes may be used to achieve a desired printed composite nonwoven textile. As depicted at a step 714, upon completion of the entanglement process, the composite structure 180 is formed into the printed composite nonwoven textile 150. At a step 716, the printed composite nonwoven textile 150 is then incorporated into the article of apparel 160. Additional aspects related to steps of the manufacturing process 700 are discussed with more detail below in connection with example configurations of the printed layer170 and the printed composite nonwoven textile 150.

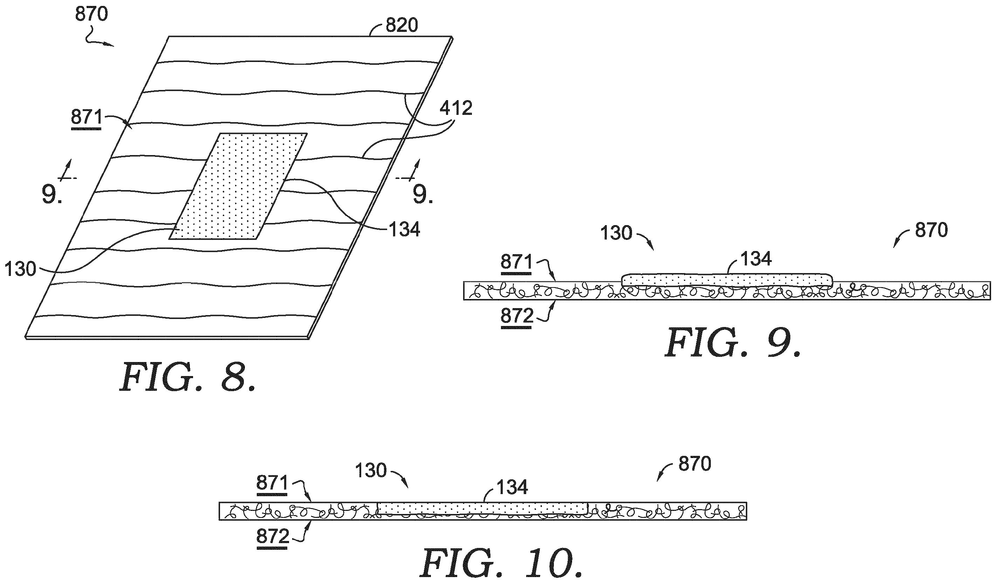

FIG. 8 depicts an example printed layer 870 prior to being combined with the first web of fibers 110 and/ the one or more additional layers 140. As shown, the printed layer 870 has a first face 871 and includes an interior web of fibers 820 and the printed component 130. In aspects, the interior web of fibers 820 has one or more features that are similar to the third web of fibers 114, and thus, fibers 412 that form the interior web of fibers 820 may also include one or more features that are similar to the fibers 410. However, in this example, the fibers 412 are depicted as having a different color property than the fibers 410, and it is contemplated that the color property of the fibers 412 may be configured such that the printed component 130 is visually discernible or distinguishable from the interior web of fibers 820. In one example aspect, the color property of the fibers 412 may be white, and in other example aspects, the color property may be grey or lighter shades of red, orange, yellow, green, blue, indigo, or violet. The fibers 412 may be dope dyed, and during entanglement with other webs of fibers, the fibers 412 may be moved more toward one face than the other face such that the color property is visually discernible or distinguishable to a greater degree on the one facing side that the other facing side. It is also contemplated herein that the fibers 412 are not coated with silicone.

Other example aspects contemplate that, like the third web of fibers 114, properties associated with the interior web of fibers 820 may be selected to achieve desired end properties for the printed composite nonwoven textile 150. In example aspects, the interior web of fibers 820 may be incorporated into the printed composite nonwoven textile 150 to achieve a desired basis weight, a desired thickness, a desired insulation property, a desired pile, and the like. Similar to the third web of fibers 114, the interior web of fibers 820 has a basis weight of from about 20 gsm to about 150 gsm, from about 35 grams per square meter (gsm) to about 65 gsm, from about 40 gsm to about 60 gsm, from about 45 gsm to about 55 gsm, or about 50 gsm. Targeting a basis weight in this range for the interior web of fibers 820 provides for a resulting printed composite nonwoven textile having a basis weight in a desired range after the interior web of fibers 820 is combined with other webs and/or layers.

As mentioned, the interior web of fibers 820 is formed of fibers, such as the fibers 412 (depicted schematically) that may be oriented generally in a common direction due to a carding and cross-lapping process. In example aspects, the fibers 412 may include PET fibers (recycled or virgin) although other virgin and recycled fiber types are contemplated herein (e.g., polyamide, cotton, and the like). In one example aspect, the fibers 412 may include 100% by weight of recycled fibers such as 100% by weight of recycled PET fibers. However, in other aspects, the fibers 412 may include 100% by weight virgin fibers, or other combinations of virgin and recycled fibers, as desired. Similar to the fibers 410, the staple length of the fibers 412 may range from about 40 mm to about 60 mm, from about 45 mm to about 55 mm, or about 51 mm. In example aspects, the fibers 412 may comprise a uniform length such as when the fibers are formed from virgin extruded PET or re-extruded PET and cut to a defined length. In other aspects, the fibers 412 may include a variation of staple length such as when the fibers 412 are derived from a shredded fiber source. Any and all aspects, and any vari ation thereof, are contemplated as being within aspects herein.

The fibers 412 may include a denier of greater than or equal to about 1.2 D, from about 1.2 D to about 3.5 D, from about 1.3 D to about 1.6 D, or about 1.5 D. Utilizing a denier within this range makes the fibers 412 less susceptible to breakage which, in turn, enhances the durability and abrasion resistance of the printed composite nonwoven textile 150. Since the interior web of fibers 820, when used, is positioned between the first web of fibers 110 and the second web of fibers 112, having a soft hand is not as important as, for example, the second web of fibers 112. Selecting a denier within this range while still achieving the basis weight of the interior web of fibers 820 enhances the overall coverage and/or opacity of the printed composite nonwoven textile 150.

As shown in FIG. 8, the printed component 130 is formed of a colorant 134 that is applied to the first face 871 via a digital printing process. As discussed, the colorant 134 may afford one or more color properties to the printed component 130 such as red, orange, yellow, green, blue, indigo, violet, and/or shades thereof. Moreover, the printed component 130 is located at one or more regions (not identified) of the interior web of fibers 412, and even though the printed component 130 is depicted as a rectangle, example aspects herein contemplate that the printed component 130 may comprises an image, graphic, design, visual indicia, one or more shapes including shapes associated with branding such as logos, geometric shapes, organic shapes, patterns, letters, numbers, and the like.

FIG. 9 depicts a cross section of the printed layer 870 of FIG. 8. As shown, the colorant 134 that forms the printed component 130 is located on the first face 871 of the printed layer 870 and partially extends through the interior web of fibers 814 towards an opposite second face 872 of the printed layer 870. While the colorant 134 as being clearly delineated on the first face 871 and the interior web of fibers 814, it is to be understood that this depiction of the colorant 134 is illustrative. Thus, aspects herein contemplate that the colorant 134 may be included in the printed layer 870 in a manner that is less delineated and/or irregular. It is further contemplated that the colorant 134 may include portions that are affixed to and/or at least partially absorbed by the fibers 412 of the interior web of fibers 814 and may also include other portions that are unattached to the fibers 412.

FIG. 10 depicts an alternative cross-section of the printed layer 870 in which the printed component is formed of a sublimation dye 136 instead of the colorant. As such, the sublimation dye 136 may be applied to the first face 871 via a sublimation printing process. Due to differences between the sublimation printing process and the digital printing process, as well as differences between the sublimation dye 136 and the colorant 134, the sublimation dye 136 is included in the printed layer 870 in a different manner than the colorant 134. As shown, the sublimation dye 136 is more absorbed into the printed layer 870. That is, the sublimation dye 136 does not extend above the first face 871 and extends partially through the interior web of fibers 820 to a greater extent that the colorant 134. Again, like FIG. 9, the depiction of the sublimation dye 136 as being clearly delineated on the first face 871 and throughout the interior web of fibers 820 is illustrative, and aspects herein contemplate that the sublimation dye 136 may be included in the printed layer 870 in a manner that is less delineated and/or irregular. It is also contemplated that the sublimation dye 136 may include portions that are bonded with, affixed to, and/or at least partially absorbed by the fibers 412 of the interior web of fibers 820 and may also include other portions that are unattached to and/or discrete from the fibers 412.

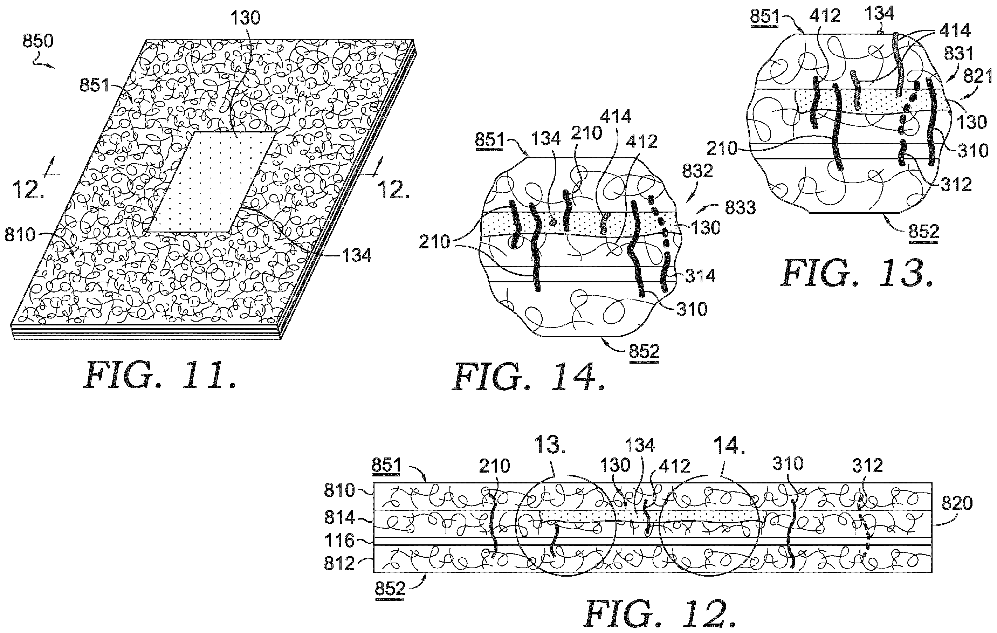

FIGS. 11-14 illustrate aspects of an example printed composite nonwoven textile 850 that is formed subsequent to performing an entanglement process on the first web of fibers 110, the printed layer 870 (e.g., the interior web of fibers 820 including the printed component 130), the second web of fibers 112, and the elastomeric layer 116. FIG. 11 depicts a first facing side 851 of the printed composite nonwoven textile 850 that is formed, at least in part, by a first entangled web of fibers 810. As best shown in FIG. 12, which depicts a cross-section of the printed composite nonwoven textile 850, the first entangled web of fibers 810 includes the fibers 210 from the first web of fibers 110, the fibers 310 and 312 from the second web of fibers 122, and the fibers 412 from the interior web of fibers 820. Moreover, a second facing side 852 of the printed composite nonwoven textile 850 is formed, at least in part, by a second entangled web of fibers 812 that primarily includes the fibers 310 and 312. Further, an interior entangled web of fibers 814 that primarily includes the fibers 412 is positioned between the first and second entangled webs of fibers 810, 812. The interior entangled web of fibers 814 also includes the printed component 130 on a first face, which is positioned adjacent to a second face of the first entangled web of fibers 814. Further, the elastomeric layer 116 is also positioned between the first and second entangled webs of fibers 810, 812 and is adjacent to the interior entangled web of fibers 814.

In example aspects, due to entanglement parameters, features of the fibers 110 and 412, and/or features of the colorant 134, the printed component 130 at least partially shows through the first entangled web of fibers 810 such that the printed component 130 is visible on the first facing side 851 of the printed composite nonwoven textile 850. Additionally, for to the same reasons, different regions of the interior entangled web of fibers 814 and different portions of the printed component 130 are incorporated into the first entangled web of fibers 810 in differing manners. In example aspects, the first entangled web of fibers 810 may be at least partially translucent. In other example aspects, parameters of the entanglement process may be configured such that the discrete particles of the colorant and/or the sublimation dye, as well as fibers including the colorant and/or the sublimation dye that form the printed component 130 are migrated to the first entangled web of fibers 810 and/or the first facing side 151.

FIG. 13 depicts a magnified view of the cross-section of the printed composite nonwoven textile 150 of FIG. 12. In FIG. 13, a first region 821 of the interior entangled web of fibers 814 is illustrated, and an example configuration of the fibers 210, 310, 312, 412 and the printed component 130 is shown. The first region 821 includes a first portion 831 of the printed component 130, and at the first region 821, at least some of the colorant 134 is affixed to the fibers 412 to form fibers 414. Moreover, the fibers 412 and 414, as well as the fibers 310 and 312, are incorporated into the first entangled web of fibers 810. The fibers 414 are incorporated such that at least one of the fibers 414 extends to the first facing side 851 of the printed composite nonwoven textile 850. Further, the first portion 831 of the printed component 130 include discrete at least some discrete particles of the colorant 134 that are not affixed to the fibers 412. As such, at the first region 821, the first facing side 851 is formed, at least in part, by the colorant 134 at the first portion of the printed component 130 and the fibers 414.

FIG. 14 depicts a magnified view of the cross-section of the printed composite nonwoven textile 150 of FIG. 12. In FIG. 14, a second region 822 of the interior entangled web of fibers 814 is illustrated, and an example configuration of the fibers 210, 310, 312, 412 and the printed component 130 is shown. The second region 822 includes a second portion 832 of the printed component 130, and similar to the first region 821, in the second region 822 the colorant 134 is affixed to the fibers 412 to form fibers 414 and is also included as discrete particles 134 that are not affixed to the fibers 412. However, unlike the first region 821, the fibers 412 and 414 are excluded from the first entangled web of fibers 810 at the second region 822. The fibers 210, 310, and 312 have a similar configuration in both the first and second regions 821, 822. Specifically, at least some of the fibers 210 extend into the interior entangled web of fibers 814, while others further extend through the interior entangled web of fibers 814 and the elastomeric layer 116 into the second entangled web of fibers 812. Further, a least some of the fibers 310 and 312 extend through the elastomeric layer 116 and the interior entangled web of fibers 814 and into the first entangled web of fibers 810.

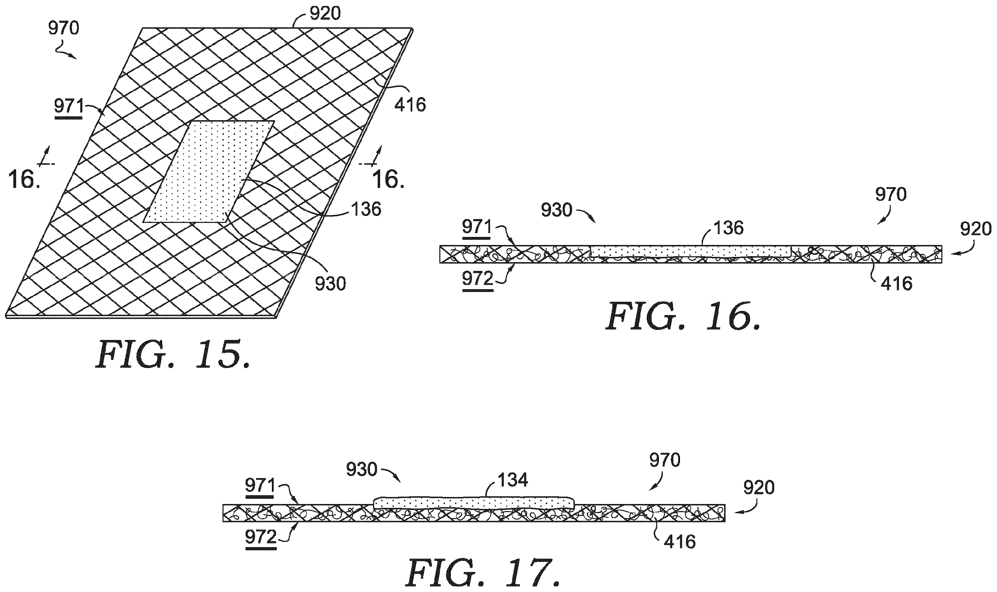

FIG. 15 depicts an example printed layer 970 prior to being combined with the first web of fibers 110 and/ the one or more additional layers 140. As shown, the printed layer 970 has a first face 971 and includes a spunlace layer 920 and the printed component 130. In aspects, the spunlace layer 920 is configured to provide a desired aesthetic to the printed component 130, and thus, the spunlace layer 920 may include one or more features that make it suitable for printing and for retaining the printed component 130. In example aspects, the spunlace layer 920 may be configured such that the printed component 130 is visually discernible or distinguishable from the spunlace layer 920. In one example aspect, the color property of the spunlace layer 920 may be white, and in other example aspects, the color property may be grey or lighter shades of red, orange, yellow, green, blue, indigo, or violet. In other example aspects, the spunlace layer 920 may include spunlace fibers, which may be in the form of a web. In another example aspect, the spunlace layer 920 may have a basis weight from about 20 gsm to about 150 gsm, from about 30 gsm to about 50 gsm, from about 35 gsm to about 45 gsm, or about 40 gsm.

In additional example aspects, it is contemplated that the spunlace layer 920 may be formed of PET. Such aspects also contemplate that the spunlace layer 920 includes PET fibers (recycled or virgin) although other virgin and recycled fiber types are contemplated herein (e.g., polyamide, cotton, and the like). In one example aspect, fibers of the spunlace layer 920 may include 100% by weight of recycled fibers such as 100% by weight of recycled PET fibers. However, in other aspects, the fibers of the spunlace layer 920 may include 100% by weight virgin fibers, or other combinations of virgin and recycled fibers, as desired. In further aspects, the staple length of fibers of the spunlace layer 920 may be longer than a staple length of fibers included in other webs of fibers of the printed composite nonwoven textile 950. In one example aspect, fibers of the spunlace layer 920 may include a variation of staple length, and in other example aspects, fibers of the spunlace layer 920 may be continuous throughout the spunlace layer 920. Further aspects contemplate that fibers of the spunlace layer 920 may include a denier that is configured to afford the spunlace layer 920 properties that provide a desired aesthetic to the printed component 130. In another example aspect, fibers of the spunlace layer 920 may be configured to afford hydrophobic properties to the spunlace layer 920 and in turn, the printed composite nonwoven textile 950. Any and all aspects, and any variation thereof, are contemplated as being within aspects herein.

Returning to the example of FIG. 15, the printed component 130 is formed of the sublimation dye 136 that is applied to the first face 971 via a sublimation printing process. As discussed, the sublimation dye 136 may afford one or more color properties to the printed component 130 such as red, orange, yellow, green, blue, indigo, violet, and/or shades thereof. Moreover, the printed component 130 is located at one or more regions (not identified) of the spunlace layer 920, and even though the printed component 130 is depicted as a rectangle, example aspects herein contemplate that the printed component 130 may comprises an image, graphic, design, visual indicia, one or more shapes including shapes associated with branding such as logos, geometric shapes, organic shapes, patterns, letters, numbers, and the like.

FIG. 16 depicts a cross-section view of the printed layer 970 of FIG. 8. As shown, the sublimation dye 136 is applied to the first face 971 and is at least partially absorbed by the spunlace layer 920 towards an opposite second face 972 of the printed layer 970. While the sublimation dye 136 clearly delineated as being even with the first face 971 and throughout the printed layer 970, it is to be understood that this depiction of the sublimation dye is illustrative. Thus, aspects herein contemplate that the sublimation dye 136 may be included in the printed layer 970 in a manner that is less delineated and/or irregular. It is also contemplated that the sublimation dye 136 may include portions that are bonded with, affixed to, and/or at least partially absorbed by the spunlace layer 920 and fibers thereof and may also include other portions that are unattached to and/or discrete from the spunlace layer 920 and fibers thereof.

FIG. 17 depicts an alternative cross-section of the printed layer 970 in which the printed component 130 is formed of the colorant 134 instead of the sublimation dye 136. As such, the colorant 134 may be applied to the first face 971 via a digital printing process. Due to differences between the digital printing process and the sublimation printing process, as well as differences between the colorant 134 and the sublimation dye 136, the colorant 134 is included in the printed layer 970 in a different manner than the sublimation dye 136. As shown, the colorant 134 partially extends above the first face 971 of the printed layer 970 and partially extends through the spunlace layer 920 towards an opposite second face 972 of the printed layer 970. While the colorant 134 as being clearly delineated on the first face 971 and the spunlace layer 920, it is to be understood that this depiction of the colorant 134 is illustrative. Thus, aspects herein contemplate that the colorant 134 may be included in the printed layer 970 in a manner that is less delineated and/or irregular. It is further contemplated that the colorant 134 may include portions that are affixed to and/or at least partially absorbed by the spunlace layer 920 and fibers thereof and may also include other portions that are unattached to the spunlace layer 920 and fibers thereof.

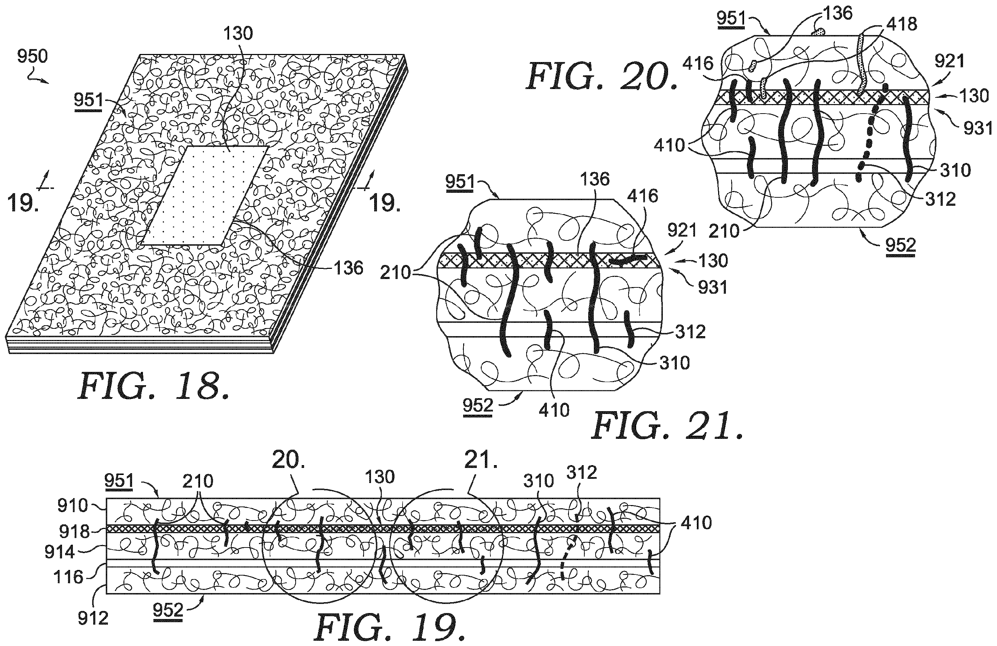

FIGS. 18-21 illustrate aspects of an example printed composite nonwoven textile 950 that is formed subsequent to performing an entanglement process on the first web of fibers 110, the printed layer 970 (e.g., the spunlace layer 920 including the printed component 130), the second web of fibers 112, the third web of fibers 114, and the elastomeric layer 116. FIG. 18 depicts a first facing side 951 of the printed composite nonwoven textile 950 that is formed, at least in part, by a first entangled web of fibers 910. As best shown in FIG. 19, which depicts a cross-section of the printed composite nonwoven textile 890, the first entangled web of fibers 910 includes the fibers 210 from the first web of fibers 110, the fibers 310 and 312 from the second web of fibers 122, and the fibers 410 from the third web of fibers 114. Moreover, a second facing side 952 of the printed composite nonwoven textile 850 is formed, at least in part, by a second entangled web of fibers 912 that primarily includes the fibers 310 and 312. A third entangled web of fibers 914 that primarily includes the fibers 410 is positioned between the first and second entangled webs of fibers 910, 912. The spunlace layer 920 is positioned between the first and third entangled webs of fibers 910, 914 and also includes the printed component 130 on a first face, which is positioned adjacent to a second face of the first entangled web of fibers 910. Further, the elastomeric layer 116 is positioned between the second and third entangled webs of fibers 912, 914.

In example aspects, due to entanglement parameters, features of the fibers 110, the spunlace layer 920, and/or features of the colorant 134, the printed component 130 at least partially shows through the first entangled web of fibers 910 such that the printed component 130 is visible on the first facing side 951 of the printed composite nonwoven textile 950. Additionally, due to the same reasons, different regions of the spunlace layer 920 and different portions of the printed component 130 are incorporated into the first entangled web of fibers 910 in differing manners.

FIG. 20 depicts a magnified view of the cross-section of the printed composite nonwoven textile 950 of FIG. 19. In FIG. 20, a first region 921 of the spunlace layer 920 is illustrated and an example configuration of the fibers 210, 310, 312, 410, fibers 416 of the spunlace layer 920, and the printed component 130 is shown. The first region 921 includes a first portion 931 of the printed component 130, and at the first region 921, at least some of the sublimation dye 136 is affixed to the fibers 416 to form fibers 418. Moreover, the fibers 416 and 418, as well as the fibers 310, 312, 410 are incorporated into the first entangled web of fibers 910. The fibers 418 are incorporated such that at least one of the fibers 418 extends to the first facing side 951 of the printed composite nonwoven textile 950. Further, the first portion 931 of the printed component 130 includes at least some discrete particles of the sublimation dye 136 that are not affixed to the fibers 416. As such, at the first region 921, the first facing side 951 is formed, at least in part, by the sublimation dye 136 at the first portion 931 of the printed component 130 and the fibers 418.

FIG. 21 depicts a magnified view of the cross-section of the printed composite nonwoven textile 150 of FIG. 19. In FIG. 21, a second region 922 of the spunlace layer 920 is illustrated, and an example configuration of the fibers 210, 310, 312, 410, 416, 418 and the printed component 130 is shown. The second region 922 includes a second portion 932 of the printed component 130, and similar to the first region 921, in the second region 922 the sublimation dye 136 is affixed and/or bonded to the fibers 416 to form fibers 418 and is also included as discrete particles 136 that are not affixed to the fibers 416. However, unlike the first region 921, the fibers 416 and 418 are excluded from the first entangled web of fibers 910 at the second region 922. The fibers 210, 310, 312, 410 have a similar configuration in both the first and second regions 921, 922. Specifically, at least some of the fibers 210 extend throughout the spunlace layer 920 and into the third entangled web of fibers 914, while others further extend through the elastomeric layer 116 and into the second entangled web of fibers 912. Moreover, a least some of the fibers 310 and 312 extend through the elastomeric layer 116, the third entangled web of fibers 914, and the spunlace layer 920 into the first entangled web of fibers 910. Further, at least some of the fibers 410 extend through the spunlace layer 920 and into the first entangled web of fibers 910, while other extend thought the elastomeric layer 116 and into the second entangled web of fibers 912.

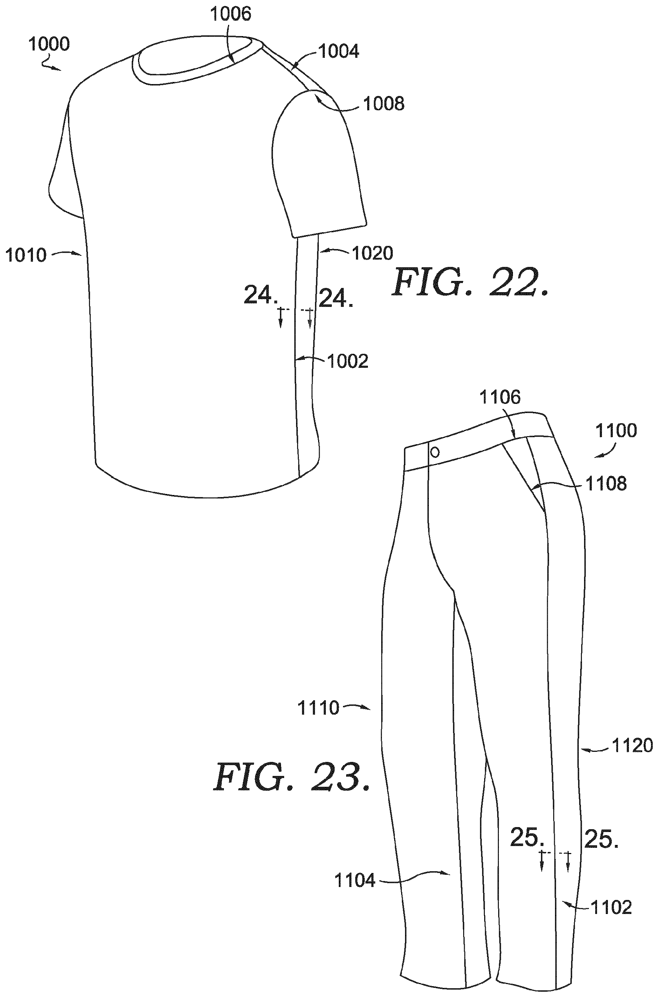

FIG. 22 illustrates an example upper body article of apparel 1000 that is in the form of an upper body garment with short sleeves although other configurations are contemplated herein such as a jacket, a hoodie, a long-sleeved shirt, a sleeveless shirt, a vest, and the like. As shown, the upper body article of apparel 1000 is formed of a first composite nonwoven textile 1010 and a second composite nonwoven textile 1020. Aspects herein contemplate that the first and/or second composite nonwoven textiles 1010, 1020 may have the same or similar features as any of the printed composite nonwoven textiles 150, 850, 950. While not depicted, aspects herein contemplate that the first and/or second composite nonwoven textiles 1010, 1020 may include any of the printed layers 170, 870, 970, and in turn, aspects herein also contemplate that the upper body article of apparel 1000 may include the printed component 130.

The upper body article of apparel 1000 includes several seam locations where the first and/or second composite nonwoven textiles1010, 1020 are joined with one another or are joined with other portions of the upper body article of apparel 1000 (e.g., a sleeve portion, a collar portion, and the like). A first seam location 1002 is located near a side portion (e.g. a side seam) of the upper body article of apparel 1000, and a second seam location 1004 is located near an upper portion (e.g., a seam extending between a collar portion and a sleeve) of the upper body article of apparel 1000. Moreover, a third seam location 1006 is located near a collar portion of the upper body article of apparel 1000, and a fourth seam location 1008 is located near a sleeve portion of the upper body article of apparel 1000.

FIG. 23 illustrates an example lower body article of apparel 1100 that is in the form a lower body garment. Although shown as a pant, it is contemplated herein that the article of apparel 1100 may be in the form of a short, a capri, a tight, and the like. As shown, the lower body article of apparel 1100 is formed of a first composite nonwoven textile 1110 and a second composite nonwoven textile 1120. Aspects herein contemplate that the first and/or second composite nonwoven textiles 1110, 1120 may have the same or similar features as any of the printed composite nonwoven textiles 150, 850, 950. While not depicted, aspects herein contemplate that the first and/or second composite nonwoven textiles 1110, 1120 may include any of the printed layers 170, 870, 970, and in turn, aspects herein also contemplate that the lower body article of apparel 1100 may include the printed component 130.

The lower body article of apparel 1100 includes several seam locations where the first and/or second composite nonwoven textiles1110, 1120 are joined with one another or are joined with other portions of the lower body article of apparel 1100 (e.g., a waist portion, a pocket portion, and the like). A first seam location 1102 is located near an outer side portion of the lower body article of apparel 1100 (e.g., a side seam), and a second seam location 1104 is located near an inner side portion (e.g., an inseam) of the lower body article of apparel 1100. Further, a third seam location 1106 is near a waist portion (e.g., a waistband) of the lower body article of apparel 1100, and fourth seam location 1108 is located near a pocket of the of the lower body article of apparel 1100.

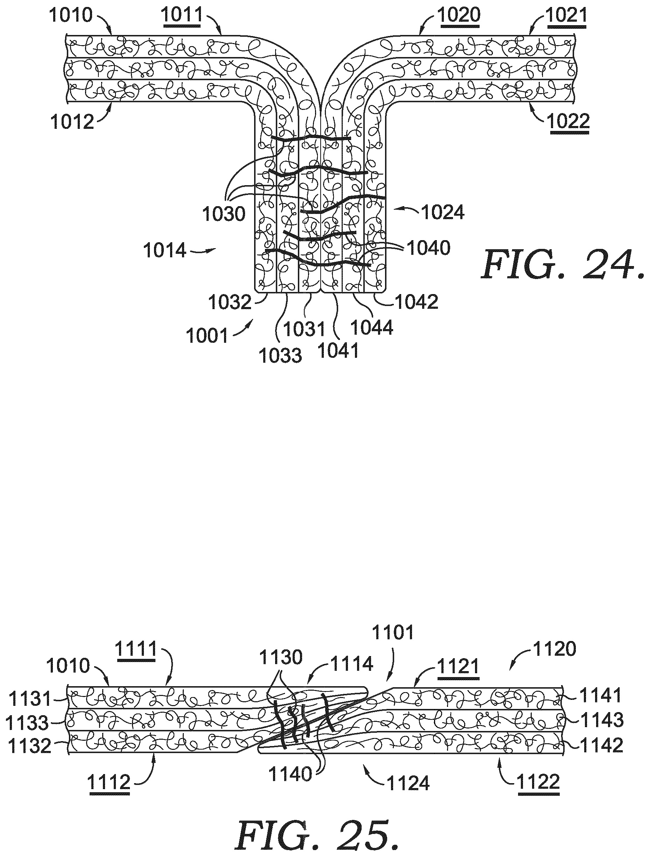

FIG. 24 depicts a cross-section view of the upper body article of apparel 1000 of FIG. 22, and an example first seam 1001 is depicted. Generally, the first seam 1001 is formed by an entanglement of fibers 1030 of the first composite nonwoven textile 1010 with fibers 1040 of the second composite nonwoven textile 1020. Moreover, the first composite nonwoven textile 1010 includes a first entangled web of fibers 1031 that form, at least in part, a first facing side 1011 of the first composite nonwoven textile 1010, a second entangled web of fibers 1032 that form, at least in part, an opposite second facing side 1012 of the first composite nonwoven textile 1010, and a third entangled web of fibers 1033 that is positioned between the first and second entangled web of fibers 1031, 1032. Similarly, the second composite nonwoven textile 1020 also includes a first entangled web of fibers 1041 that form, at least in part, a first facing side 1021 of the second composite nonwoven textile 1020, a second entangled web of fibers 1042 that form, at least in part, an opposite second facing side 1022 of the second composite nonwoven textile 1020, and a third entangled web of fibers 1043 that is positioned between the first and second entangled web of fibers 1041, 1042. In example aspects, a formation of the first seam 1001 may include positioning a first edge 1014 of the first composite nonwoven textile 1010 adjacent to a second edge 1024 of the second composite nonwoven textile 1020 such that the first facing side 1111 of the first composite nonwoven textile 1010 abuts or contacts the first facing side 1021 of the second composite nonwoven textile 1020. Then, while holding the first and second composite nonwoven textiles 1010, 1020 in this position subjecting the first and second edges 1014, 1024 to an entanglement process such that the fibers 1030, which may be from any of the first, second, or third entangled webs of fibers 1031, 1032, 1033 are entangled with the fibers 1040, which may be from any of the first, second, or third entangled webs of fibers 1041, 1042, 1043.

FIG. 25 depicts a cross-section view of the lower body article of apparel 1100 of FIG. 23, and an example second seam 1101 is depicted. Generally, the second seam 1101 is formed by an entanglement of fibers 1130 of the first composite nonwoven textile 1110 with fibers 1140 of the second composite nonwoven textile 1120. Moreover, the first composite nonwoven textile 1110 includes a first entangled web of fibers 1131 that form, at least in part, a first facing side 1111 of the first composite nonwoven textile 1110, a second entangled web of fibers 1132 that form, at least in part, an opposite second facing side 1112 of the first composite nonwoven textile 1110, and a third entangled web of fibers 1133 that is positioned between the first and second entangled web of fibers 1131, 1132. Similarly, the second composite nonwoven textile 1120 also includes a first entangled web of fibers 1141 that form, at least in part, a first facing side 1121 of the second composite nonwoven textile 1120, a second entangled web of fibers 1142 that form, at least in part, an opposite second facing side 1122 of the second composite nonwoven textile 1120, and a third entangled web of fibers 1143 that is positioned between the first and second entangled web of fibers 1141, 1142. In example aspects, a formation of the second seam 1101 may include positioning a first edge 1114 of the first composite nonwoven textile 1110 adjacent to a second edge 1124 of the second composite nonwoven textile 1120 such that the second facing side 1112 of the first composite nonwoven textile 1110 abuts or contacts the first facing side 1121 of the second composite nonwoven textile 1120. Then, while holding the first and second composite nonwoven textiles 1110, 1120 in this position subjecting the first and second edges 1114, 1124 to an entanglement process such that the fibers 1130, which may be from any of the first, second, or third entangled webs of fibers 1131, 1132, 1133 are entangled with the fibers 1140, which may be from any of the first, second, or third entangled webs of fibers 1141, 1142, 1143.

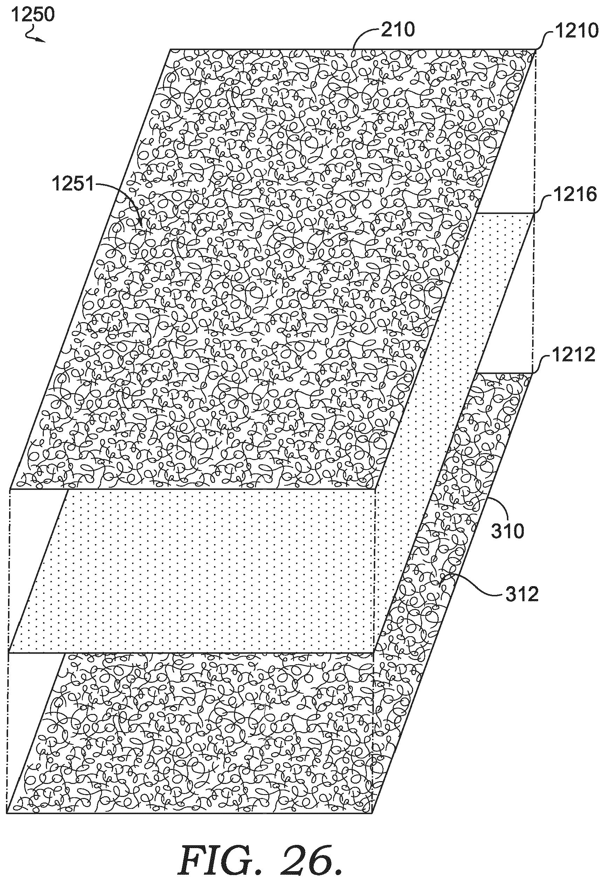

FIG. 26 illustrates an exploded view of an example composite nonwoven textile 1250 for use in manufacturing processes that afford aesthetic and/or functional properties to the composite nonwoven textile 1250, which, in turn, are afforded to an article of apparel incorporating the composite nonwoven textile 1250. In accordance with aspects herein, the composite nonwoven textile 1250 may be formed by performing an entanglement process on the first web of fibers 110, the second web of fibers 112, and the elastomeric layer 116. As such, in FIG. 26, the composite nonwoven textile 1250 is depicted subsequent to performing an entanglement process and prior to performing a manufacturing process for forming a debossed portion or pleated construction.

As shown, the composite nonwoven textile 1250 includes a first entangled web of fibers 1210, a second entangled web of fibers 1212, and an elastomeric layer 1216 positioned between the first entangled web of fibers 1210 and the second entangled web of fibers 1212. The first entangled web of fibers 1210 includes the fibers 210 from the first web of fibers 110 and forms, at least in part, a first outer facing side 1251 of the composite nonwoven textile 1250. Similarly, the second entangled web of fibers 1212 includes the fibers 310, 312 from the secon d web of fibers 112 and forms, at least in part, an opposite second outer facing side 1252 of the composite nonwoven textile 1250 (not shown in FIG. 26). The elastomeric layer 1216 is formed of a thermoplastic elastomer such as a thermoplastic polyurethane (TPU), a thermoplastic polyether ester elastomer (TPEE), combinations of TPU and TPEE, and the like. In a particular example aspect, the elastomeric layer 1216 may comprise a TPU meltblown layer.

Aspects herein contemplate that the fibers 210, 310, 312 may include any of their respective properties discussed herein. Such properties of the fibers 210, 310, 312 may be adjusted and/or selectively included to achieve desired end properties for the composite nonwoven textile 1250. Similar aspects herein contemplate that the elastomeric layer 1216 may include any of its properties discussed herein. Further, such properties of the elastomeric layer 1216 may be adjusted and/or selectively included to achieve desired end properties for the composite nonwoven textile 1250. Any and all aspects, and any variation thereof, are contemplated as being within aspects herein.

Although not depicted, aspects herein contemplate that the composite nonwoven textile 1250 may include one or more additional entangled webs of fibers and/or layers, which may be any of the entangled webs of fibers and/or layers discussed herein. In more specific aspects, any of the one or more additional entangled webs of fibers and/or layers of the composite nonwoven textile 1250 may be the first entangled web of fibers 810, 910, 1210, the second entangled web of fibers 812, 912, 1212, the interior entangled web of fibers 814, the third entangled web of fibers 914, the elastomeric layers 116, 1216, the interior layer 120, the printed layers 170, 870, 970, or the spunlace layer 920. Additional aspects contemplate that properties of the one or more additional entangled webs of fibers and/or layers may be adjusted and/or selectively included to achieve desired end properties for the composite nonwoven textile 1250. Further aspects contemplate that an arrangement of the one or more additional entangled webs of fibers and/or layers, the first entangled web of fibers 1210, the second entangled web of fibers 1212, and the elastomeric layer 1216 may be adjusted and/or configured to achieve desired end properties for the composite nonwoven textile 1250.

Aspects herein contemplate that one or more properties of the first entangled web of fibers 1210, the second entangled web of fibers 1212, and/or the elastomeric layer 1216 may be configured such that the composite nonwoven textile 1250 is suitable for manufacturing processes in which a debossed portion is formed on the composite nonwoven textile 1250. Examples of properties of the first entangled web of fibers 1210, the second entangled web of fibers 1212, and/or the elastomeric layer 1216 include but are not limited to melt temperature, thickness, color, basis weight, material composition, hydrophobicity, hydrophilicity, fiber composition, fiber staple length, fiber denier, and the like.

In particular example aspects, the first entangled web of fibers 1210, the second entangled web of fibers 1212, and the elastomeric layer 1216 each comprises a material that has a respective melt temperature. Although not illustratively depicted, in the example of FIG. 26, the first entangled web of fibers 1210 includes a first material having a first melt temperature, the second entangled web of fibers 1212 includes a second material having a second melt temperature, and the elastomeric layer 1216 includes a third material having a third melt temperature that is about 40°C less than the first melt temperature of the first material. Additional aspects herein contemplate that the first melt temperature of the first material may be from about 210 °C to about 190°C, from about 205 °C to about 195°C, or about 200°C and further contemplate that the second melt temperature of the second material may be from about 210°C to about 190°C, from about 205 °C to about 195°C, or about 200°C. Such aspects also contemplate that the third melt temperature of the third material may be from about 170°C to about 150°C, from about 165°C to about 155°C, or about 160°C. In one particular example aspect, the first melt temperature of the first material is about 200°C, the second melt temperature of the second material is about 200°C, and the third melt temperature of the third material is about is about 160°C. As used herein, the term "about" means generally within ± 10% of an indicated value. Aspects herein further contemplate that the first, second, and third materials described above with their respective melt temperatures may be associated with different materials layers than those described above. For instance, the first entangled web of fibers 1210 may be formed from the second material or the third material. Similarly, the second entangled web of fibers 1212 may be formed from the first material or the third material. As well, the elastomeric layer 1216 may be formed of the first material or the second material. Further aspects herein contemplate that a material layer formed from the third material with its respective lower melt temperature, irrespective of whether that third material is used to form the first entangled web of fibers 1210, the second entangled web of fibers 1212, or the elastomeric layer 1216, may be positioned between respective other layers formed from the first material and the second material. In addition, aspects herein contemplate that the layer formed from the third material with its lower melt temperature include a color (know herein as a "third color") which, as explained below, may be imparted during extrusion of the fibers forming the layer, or during a post-extrusion step such as by printing.

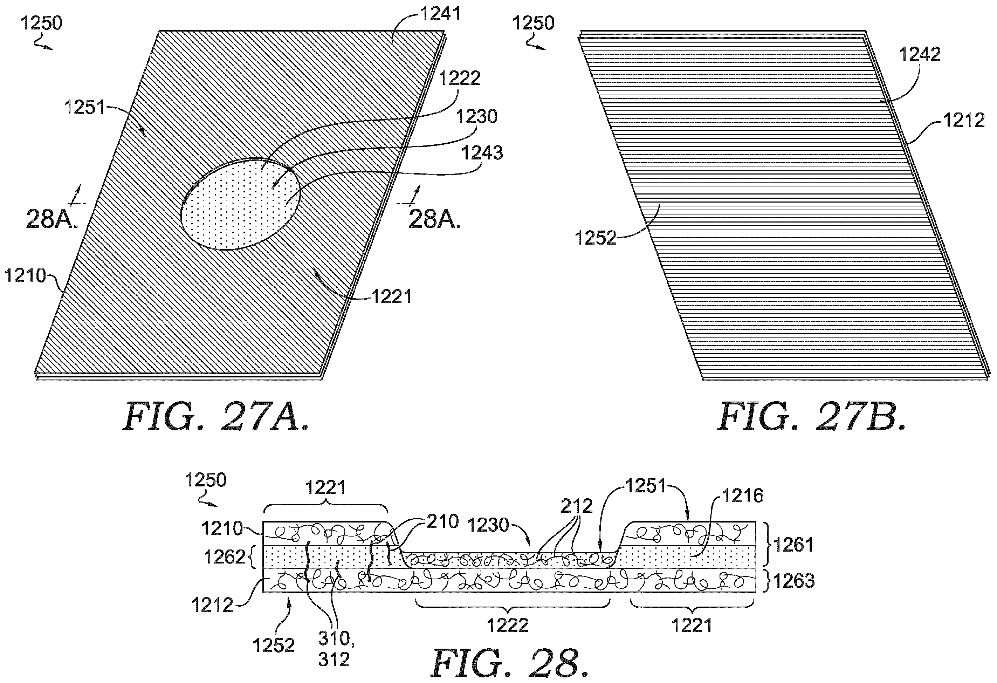

FIGS. 27A-28 illustrate aspects of the composite nonwoven textile 1250 subsequent to performing a manufacturing process that forms a debossed portion 1230 on the first outer facing side 1251 of the composite nonwoven textile 1250. In FIGS. 27A and 27B, the composite nonwoven textile 1250 is illustratively depicted to represent color properties of the first entangled web of fibers 1210, the second entangled web of fibers 1212, and the elastomeric layer 1216. Accordingly, in FIG. 27A, the diagonal lines represent a first color 1241 of the first entangled web of fibers 1210 and the dots represent a third color 1243 of the elastomeric layer 1216. In FIG. 27B, the horizontal lines represent a second color 1242 of the second entangled web of fibers 1212.

FIG. 27A illustrates the first outer facing side 1251 of the composite nonwoven textile 1250, and as shown, the debossed portion 1230 is visible on the first outer facing side 1251. The composite nonwoven textile 1250 includes a first region 1221 and a second region 1222, which are also visible on the first outer facing side 1251. At the first region 1221, the first outer facing side 1251 is formed, at least in part, from the first entangled web of fibers 1210, and in turn, the first color 1241 of the first entangled web of fibers 1210 is visible on the first outer facing side 1251 at the first region 1221. At the second region 1222, the first outer facing side 1251 is formed, at least in part from the debossed portion 1230. As such, the debossed portion 1230 is visible on the first outer facing side 1251 at the second region 1222. Additionally, because at least some of the fibers 210 of the first entangled web of fibers 1210 are integrated within the debossed portion 1230 at the second region 1222, the third color 1243 of the elastomeric layer 1216 is visible on the first outer facing side 1251 at the second region 1222. The third color 1243 may be added by a sustainable, inkless process during an extrusion of fibers that may form the elastomeric layer 1016 (e.g., otherwise known as dope dying) or the third color 143 may be added after an extrusion of fibers that may form the elastomeric layer 1016 by, for example, a printing process contemplated herein.

FIG. 27B illustrates the opposite second outer facing side 1252 of the composite nonwoven textile 1250, and as shown, the debossed portion 1230 is not visible on the opposite second outer facing side 1252. Unlike the first outer facing side 1251, the opposite second outer facing side 1252 is formed, at least in part, from the second entangled web of fibers 1212 at the first region 1221 and the second region 1222. Accordingly, the second color 1242 of the second entangled web of fibers 1212 is visible on the opposite second outer facing side 1252 at the first region 1221 and the second region 1222.

Aspect herein contemplate that the first color 1241 is different than the third color 1243, and/or the first color 1241 is different than the second color 1242 and the third color 1243. In another example aspect, the second color 1242 is different than the third color 1243. In other example aspects, the first color 1241 is substantially the same as the second color 1242, and the first color 1241 is substantially the same as the third color 1243. A color may be determined to be different from another color in accordance with aspects discussed herein. Moreover, a color may be determined to be "similar" or "substantially the same" from another color based on a difference between a numerical color value of one color and a numerical color value relative to a percentage of either numerical color value. If the percentage of the difference between a numerical color value of a first color and a numerical color value of a second color is equal to or less than 5%, then the first color is "substantially the same" as the second color.

FIG. 28 illustrates a cross-section view of the composite nonwoven textile 1250. As shown, the second region 1222 is debossed relative the first region 1221. Stated differently, a thickness of the composite nonwoven textile 1250 at the first region 1221 is greater than a thickness of the composite nonwoven textile 1250 at the second region 1222. More specifically, a thickness 1262 of the debossed portion 1230 is about 50% less than a thickness 1261 of the first entangled web of fibers 1210 and the elastomeric layer 1216 at the first region 1221. Additionally, a thickness 1263 of the second entangled web of fibers 1212 in the composite nonwoven textile 1250 is within about 95% of each other at the first region 1221 and the second region 1222. Stated differently, a thickness of the second entangled web of fibers 1212 in the composite nonwoven textile 1250 at the first region 1221 is within about 95% of a thickness of the second entangled web of fibers 1212 in the composite nonwoven textile 1250 at the second region 1222.

In aspects, the debossed portion 1230 may refer to a portion of the second region 1222 that includes the first entangled web of fibers 1210 and the elastomeric layer 1216 but does not include the second entangled web of fibers 1212. Further aspects contemplate that a relationship and/or configuration of the first entangled web of fibers 1210 and the elastomeric layer 1216 at the debossed portion 1230 may be described in differing manners. In one example aspect, the debossed portion 1230 may comprise the elastomeric layer 1216 in a film form that encapsulates a plurality of fibers 212 from the first entangled web of fibers 1210. As used herein when describing a configuration of fibers at a debossed portion, the term "encapsulates" means that at least half of a surface area of a fiber is surrounded by a film form of an elastomeric layer. In another example aspect, the debossed portion 1230 may comprises a matrix structure formed from the plurality of fibers 212 and the film.

Although the first entangled web of fibers 1210, the second entangled web of fibers 1212, and the elastomeric layer 1216 are shown as distinct layers in FIGs. 26A-28, it is contemplated herein that the first entangled web of fibers 1210 and the second entangled web of fibers 1212 are entangled with one another and extend through the elastomeric layer 1216 to form a cohesive structure. Notwithstanding, in example aspects, each of the first entangled web of fibers 1210, the second entangled web of fibers 1212, and the elastomeric layer 1216 retain features of a distinct layer at the first region 1221 of the composite nonwoven textile 1250. In contrast, at the second region 1222 of the composite nonwoven textile 1250, only the second entangled web of fibers 1212 retains features of a distinct layer since fibers of the first entangled web of fibers 1210 are integrated within the elastomeric layer 1216 at the debossed portion 1230.

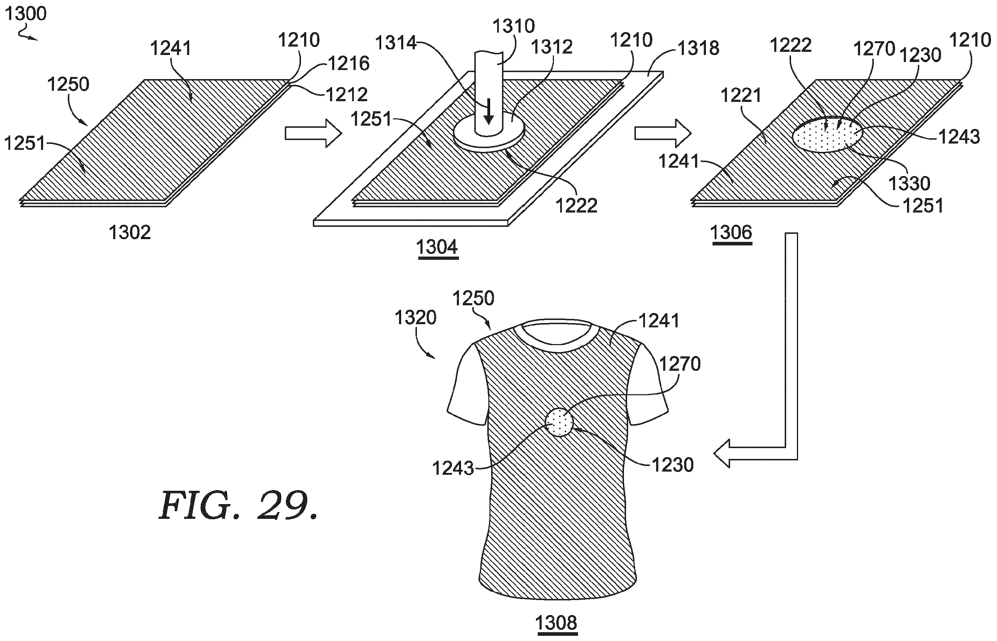

FIG. 29 illustrates an example manufacturing process, referenced generally by the numeral 1300, for use in forming the debossed portion 1230 of the composite nonwoven textile 1250 and for incorporating the same in an article of apparel 1320. It is to be understood that any depictions of manufacturing components in FIG. 29 are illustrative and meant to convey general features of individual steps of the manufacturing process 1300. Additionally, while steps of the manufacturing process 1300 are depicted as being performed in a sequential order, aspects herein contemplate that the manufacturing process 1300 may include any combination of one or more steps, any of which may be repeated or performed in a different order than as depicted. At a high level, FIG. 29 depicts individual steps of the manufacturing process 1300 that generally include applying one or more of heat and pressure to the second region 1222 of the first outer facing side 1251 of the composite nonwoven textile 1250 to impart a graphic 1270 th ereto.

Beginning with a step 1302, the composite nonwoven textile 1250 is obtained and/or provided. The composite nonwoven textile 1250 includes the first entangled web of fibers 1210 having the first color 1241, the second entangled web of fibers 1212 having the second color 1242 (not visible), and the elastomeric layer 1216 having the third color 1243 and positioned between the first entangled web of fibers 1210 and the second entangled web of fibers 1212. The first color 1241 and the third color 1243 are illustratively depicted and represented in the same manner as in FIGS. 27A and 27B.

At a step 1304, one or more of heat and pressure 1314, which is illustratively represented by an arrow, is applied to the second region 1222 on the first outer facin g side 1251 of the composite nonwoven textile 1250 such that the elastomeric layer 1216 forms a film that encapsulates a plurality of fibers from the first entangled web of fibers 1210. In the example of FIG. 29, a debossing tool 1310 is used to apply the one or more of heat and pressure 1314 to the second region 1222 of the composite nonwoven textile 1250. The debossing tool 1310 is just one example and other/tools methods are contemplated herein including, for example, lasers, ultrasonic welders, and the like. The debossing tool 1310 includes a tooling component 1312 and is configured to transmit heat to portions of the first outer facing side 1251 that contact or are nearly in contact with the tooling component 1312 and/or a surface (not visible) of the tooling component 1312 during the application of the one or more of heat and pressure 1314. Further, while the tooling component 1312 is depicted as having a circular shape, aspects herein contemplate that the tooling component 1312 and/or its surface may comprise a design, visual indicia, one or more shapes, and/or one or more linear or curvilinear portions associated with branding commercial products such as logos, geometric shapes, organic shapes, patterns, letters, numbers, and the like.

To initiate the application of the one or more of heat and pressure 1314, the debossing tool 1310 is positioned such that the tooling component 1312 and/or its surface contact or nearly contact the first outer facing side 1251 at the second region of 1222. The debossing tool 1310 is then held in position while the one or more of heat and pressure 1314 is applied to the second region 1222 on the first outer facing side 1251 of the composite nonwoven textile 1250. To terminate the application of the one or more of heat and pressure 1314, the debossing tool 1310 is repositioned such that the tooling component 1312 and its surface are spaced apart from the first outer facing side 1251 at the second region of 1222.

In example aspects, the debossing tool 1310 is configured to apply the one or more of heat and pressure 1314 at a temperature and for a duration that is sufficient for the elastomeric layer 1216 to form a film that encapsulates a plurality of fibers from the first entangled web of fibers 1210. In other example aspects, the debossing tool 1310 is configured to apply heat to the second region of 1222 of the first outer facing side 1251 at a temperature of from about 210°C to about 160 °C, from about 205 °C to about 165 °C , from about 200°C to about 170 °C , from about 195 °C to about 175 °C, from about 190 °C to about 180°C, from about 200 °C to about 190 °C, or about 195 °C for a duration from about 80 seconds to about 20 seconds, from about 75 seconds to about 25 seconds, from about 70 seconds to about 30 seconds, from about 65 seconds to about 35 seconds, from about 60 seconds to about 40 seconds, from about 55 seconds to about 45 seconds, or for about 50 seconds. In one particular example aspect, the debossing tool 1310 is configured to apply heat to the second region of 1222 of the first outer facing side 1251 at a temperature of from about 190°C to about 170°C for a duration from about 32 seconds to about 28 seconds. In another particular example aspect, the debossing tool 1310 is configured to apply heat to the second region of 1222 of the first outer facing side 1251 at a temperature of about 180°C for a duration of about 30 seconds. As used herein, the term "about" means generally within ± 10% of an indicated value. In yet another particular example aspect, the one or more of heat and pressure 1314 are applied concurrently.

The step 1304 also includes positioning the composite nonwoven textile 1250 on a deformable surface 1318 such that the opposite second outer facing side 1252 of the composite nonwoven textile 1250 is positioned adjacent to the deformable surface 1318 during the application of the one or more of heat and pressure 1314. The deformable surface 1318 is configured to prohibit and/or reduce any residual heat from contacting the opposite second outer facing side 1252 during the application of the one or more of heat and pressure 1314. As such, the deformable surface 1318 includes insulative properties and is formed of a highly -insulative material (e.g., a rubberized foam). In addition, the deformable surface 1318 is also configured to deform in a manner that corresponds to a shape of tooling component 1312 and/or its surface during the application of the one or more of heat and pressure 1314.

At a step 1306, the application of the one or more of heat and pressure 1314 has ceased, and at the second region 1222 of the composite nonwoven textile 1250, the elastomeric layer 1216 has formed a film 1330 that encapsulates a plurality of fibers from the first entangled web of fibers 1210. As such, a color of the first outer facing side 1251 at the second region 1222 is the third color 1243, and a color of the first outer facing side 1251 at the first region 1221 is the first color 1241. Further, the second region 1222 has formed a graphic 1270 on the first outer facing side 1251 of the composite nonwoven textile 1250. The graphic 1270 has a shape that corresponds to a shape of the tooling component 1312 and/or its surface. Even though the graphic 1270 has a circular shape in the example of FIG. 29, aspects herein contemplate that a the graphic 1270 may comprise a design, visual indicia, one or more shapes, and/or one or more linear or curvilinear portions associated with branding commercial products such as logos, geometric shapes, organic shapes, patterns, letters, numbers, and the like. Such aspects further contemplate that graphics having different shapes than the graphic 1270 may be formed by using a debossing tool with a tooling component that has a different shape than the tooling component 1312.

In one example aspect, a thickness of the composite nonwoven textile 1250 at the second region 1222 is about 50% less than a thickness of the composite nonwoven textile 1250 at the first region 1221. In other example aspects, a thickness of the composite nonwoven textile at the second region 1222 is from about 70% to about 30%, from about 65% to about 35%, from about 60% to about 40%, or from about 55% to about 45% less than a thickness of the composite nonwoven textile 1250 at the first region 1221. In further example aspects, a thickness of the second entangled web of fibers 1212 in the composite nonwoven textile 1250 is within about 95% to about 85%, about 90%, or about 95% of each other at the first region 1221 and the second region 1222. As used herein, the term "about" means generally within ± 10% of an indicated value.

At a step 1308, the composite nonwoven textile 1250 is incorporated into the article of apparel 1320. The composite nonwoven textile 1250 may form at least a portion of the article of apparel 1320, and one example aspect contemplates that the composite nonwoven textile 1250 is a panel of the article of apparel 1320 that is combined with one or more other textiles (e.g., a composite nonwoven textiles, woven textiles, and/or knit textiles) to form the article of apparel 1320.

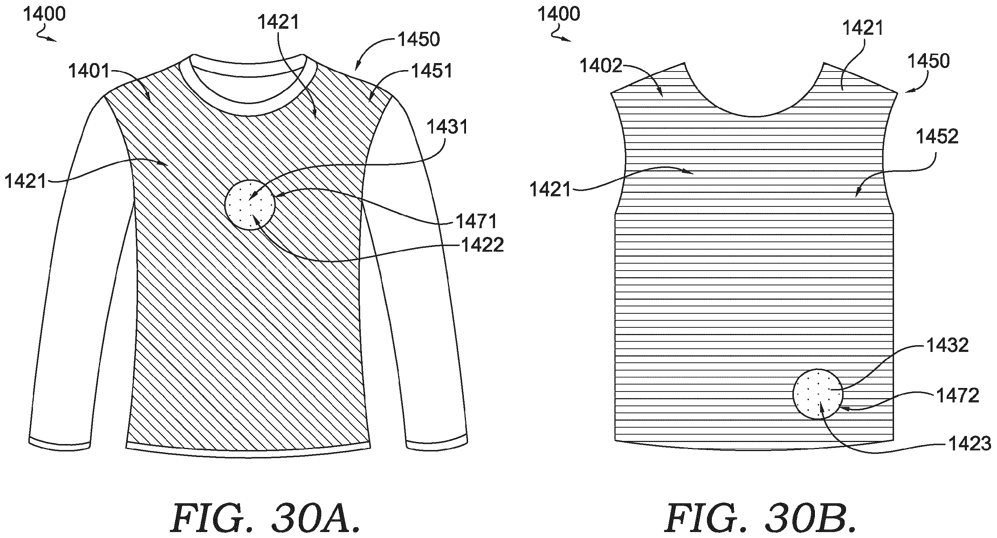

FIGS. 30A and 30B illustrate an example upper body article of apparel 1400 incorporating a composite nonwoven textile 1450. The upper body article of apparel 1400 is in the form of an upper body garment shown with long sleeves in FIG. 30A to indicate that the upper body article of apparel 1400 may be in the form of a jacket, a hoodie, a short-sleeved shirt, and the like. The upper body article of apparel 1400 is shown without sleeves in FIG. 30B to indicate that the upper body article of apparel 1400 may be in the form of a sleeveless shirt, a vest, and the like. The upper body article of apparel 1400 includes an outer-facing surface 1401 and an inner-facing surface 1402. As shown, the outer-facing surface 1401 is an outermost-facing surface of the upper body article of apparel 1400, and similarly, the inner-facing surface 1402 is an innermost-facing surface of the upper body article of apparel 1400. Moreover, a first outer facing side 1451 of the composite nonwoven textile 1450 forms, at least in part, the outer-facing surface 1401 of the upper body article of apparel 1400, and an opposite second outer facing side 1452 of the composite nonwoven textile 1450 forms, at least in part, the inner-facing surface 1402 of the upper body article of apparel 1400.

The composite nonwoven textile 1450 includes the same features as the composite nonwoven textile 1250 but includes an additional region with an additional debossed portion. As such, the composite nonwoven textile 1450 includes a first region 1421, a second region 1422, and a third region 1423. The first region 1421 includes a first entangled web of fibers, a second entangled web of fibers, and an elastomeric layer positioned between the first and second entangled web of fibers. At the second region 1422, the composite nonwoven textile 1450 includes a first debossed portion 1431 and the second entangled web of fibers, and the third region 1423 includes a second debossed portion 1432 and the first entangled web of fibers.

The first debossed portion 1431 includes the same features as the debossed portion 1230, and thus, the first debossed portion 1431 is formed on the first outer facing side 1451 of the composite nonwoven textile 1450 and includes a plurality of fibers from the first entangled web of fibers that are integrated within the elastomeric layer. Moreover, the first debossed portions 1431 forms a first graphic 1471, and as shown in FIGS. 30A and 30B, the first debossed portion 1431 is visible on the outer-facing surface 1401 of the upper body article of apparel 1400 and is not visible on the inner-facing surface 1402 of the upper body article of apparel 1400.

The second debossed portion 1432 includes features that are similar to the debossed portion 1230 but is formed on the opposite second outer facing side 1452 of the composite nonwoven textile 1450. As such, unlike the debossed portion 1230, the second debossed portion 1432 includes a plurality of fibers from the second entangled web of fibers that are integrated within the elastomeric layer. The second debossed portions 1432 forms a second graphic 1472, and in one example aspect, the second graphic 1472 has an appearance that is different than the first graphic 1471. In another example aspect, the second graphic 1472 may have an appearance that is substantially the same as the first graphic 1471. Further, as depicted in FIGS. 30A and 30B, the second debossed portion 1432 is visible on the inner-facing surface 1402 of the upper body article of apparel 1400 and is not visible on the outer-facing surface 1401 of the upper body article of apparel 1400.

In example aspects, the second debossed portion 1432 may be formed in a similar manner as the debossed portion 1230, but the debossing tool 1310 may be applied to the second entangled web of fibers 1212 instead of the first entangled web of fibers 1210. In this aspect, the elastomeric layer 1216 forms a film that encapsulates a plurality of fibers from the second entangled web of fibers 1212 such that the color of the second debossed portion 1432 is the third color 1243 similar to the first debossed portion 1431. In example aspects, the second debossed portion 1432 may include, for example, care instructions for the article of apparel 1400 which avoids extra manufacturing steps involved with sewing or attaching a care label and which may also facilitate easier recycling of the article of apparel 1400.

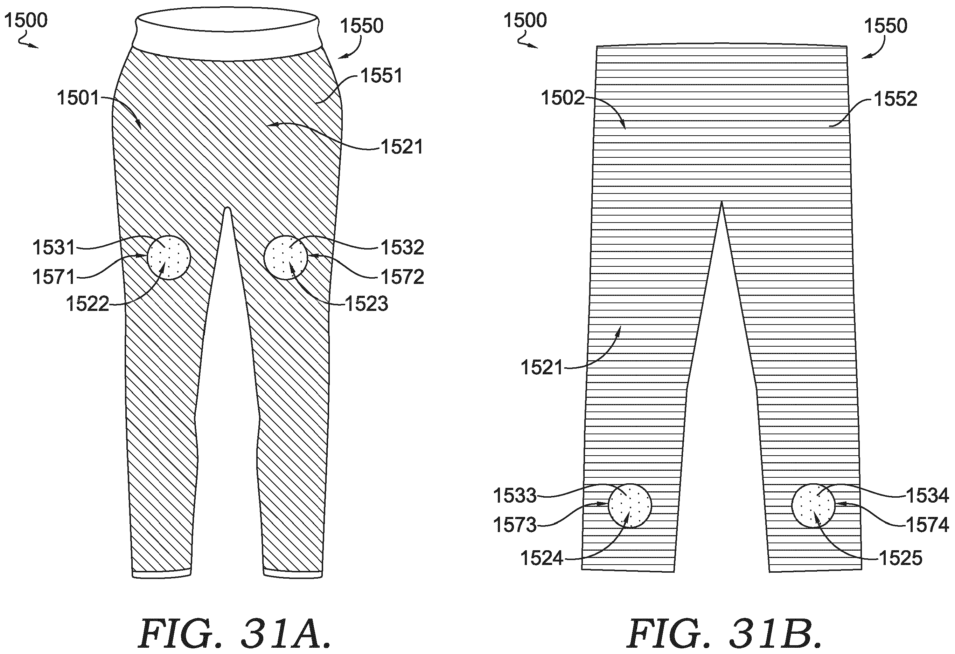

FIGS. 31A and 31B illustrate an example lower body article of apparel 1500 incorporating a composite nonwoven textile 1550. The lower body article of apparel 1500 is in the form of a lower body garment and is shown as a pant, although it is contemplated that the lower body article of apparel 1500 may be in the form of a short, a capri, a tight, and the like. The lower body article of apparel 1500 includes an outer-facing surface 1501 and an inner-facing surface 1502. As shown, the outer-facing surface 1501 is an outermost-facing surface of the lower body article of apparel 1500, and similarly, the inner-facing surface 1502 is an innermost-facing surface of the lower body article of apparel 1500. Moreover, a first outer facing side 1551 of the composite nonwoven textile 1550 forms, at least in part, the outer-facing surface 1501, and an opposite second outer facing side 1552 of the composite nonwoven textile 1550 forms, at least in part, the inner-facing surface 1502.

The composite nonwoven textile 1550 includes the same features as the composite nonwoven textile 1250 but includes additional regions with additional debossed portions. Thus, the composite nonwoven textile 1550 includes a first region 1521, a second region 1522, a third region 1523, a fourth region 1524, and a fifth region 1525. The first region 1521 includes a first entangled web of fibers, a second entangled web of fibers, and an elastomeric layer positioned between the first and second entangled web of fibers. The second and third regions 1522, 1523 both include the second entangled web of fibers and respectively include a first debossed portion 1531 and a second debossed portion 1532. The fourth and fifth regions 1524, 1525 both include the first entangled web of fibers and respectively include a third debossed portion 1533 and a fourth debossed portion 1534.

The first and second debossed portions 1531, 1532 include the same features as the debossed portion 1230, and thus, the first and second debossed portions 1531, 1532 are formed on the first outer facing side 1551 of the composite nonwoven textile 1550 and include a plurality of fibers from the first entangled web of fibers that are integrated within the elastomeric layer. Moreover, the first debossed portion 1531 forms a first graphic 1571, and the second debossed portion 1532 forms a second graphic 1572. As shown in FIGS. 31A and 31B, the first and second debossed portions 1531, 1532 are visible on the outer-facing surface 1501 of the lower body article of apparel 1500 and are not visible on the inner-facing surface 1502 of the lower body article of apparel 1500.

The third and fourth debossed portions 1533, 1534 includes features that are similar to the debossed portion 1230 but are formed on the opposite second outer facing side 1552 of the composite nonwoven textile 1550. As such, unlike the debossed portion 1230, the third and fourth debossed portions 1533, 1534 include a plurality of fibers from the second entangled web of fibers that are integrated within the elastomeric layer. The third debossed portion 1533 forms a third graphic 1573, and the fourth debossed portion 1534 forms a fourth graphic 1574. It is contemplated herein that any of the first, second, third, and fourth graphics 1571, 1572, 1573, and 1574 may have the same or a different appearance. Further, as depicted in FIGS. 31A and 31B, the third and fourth debossed portions 1533, 1534 are visible on the inner-facing surface 1502 of the lower body article of apparel 1500 and are not visible on the outer-facing surface 1501 of the lower body article of apparel 1500.

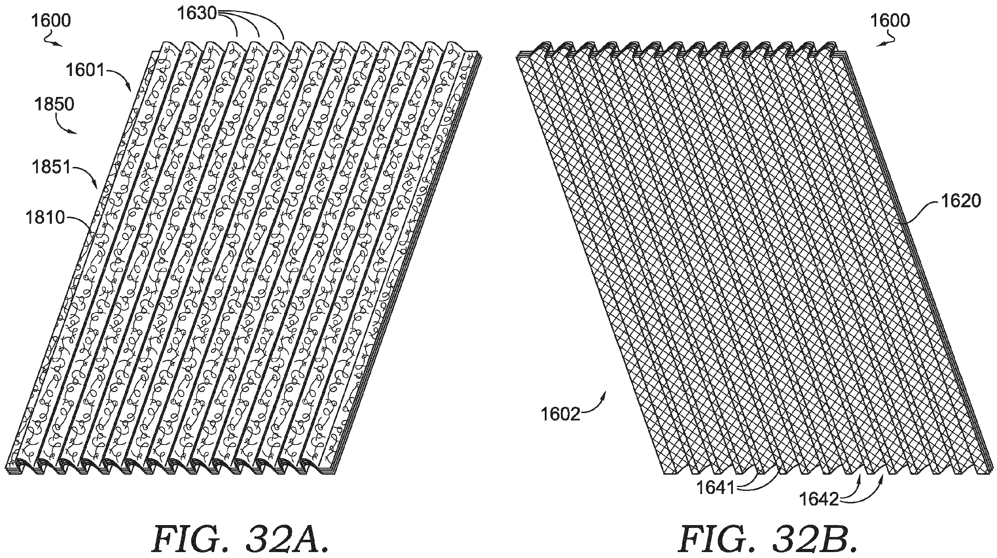

FIGS. 32A-33 illustrate an example pleated construction 1600 that includes a composite nonwoven textile 1850, an elastically resilient structured textile 1620, and a plurality of pleats 1630. As used herein, the term "structured textile" means a textile that has one of a knit or woven construction, and the term "elastically resilient" means that the textile returns to substantially its original length after being subject to tensioning forces. FIG. 32A illustrates a first side 1601 of the pleated construction 1600 that is formed, at least in part, from the composite nonwoven textile 1850, and FIG. 32B illustrates a second side 1602 of the pleated construction 1600 that is formed, at least in part, from the elastically resilient structured textile 1620. Moreover, as discussed hereinafter, the pleated construction 1600 is configured in a manner such that peaks of the plurality of pleats 1630 are formed at the first side 1601 and valleys of the plurality of pleats 1630 are formed at the second side 1602.

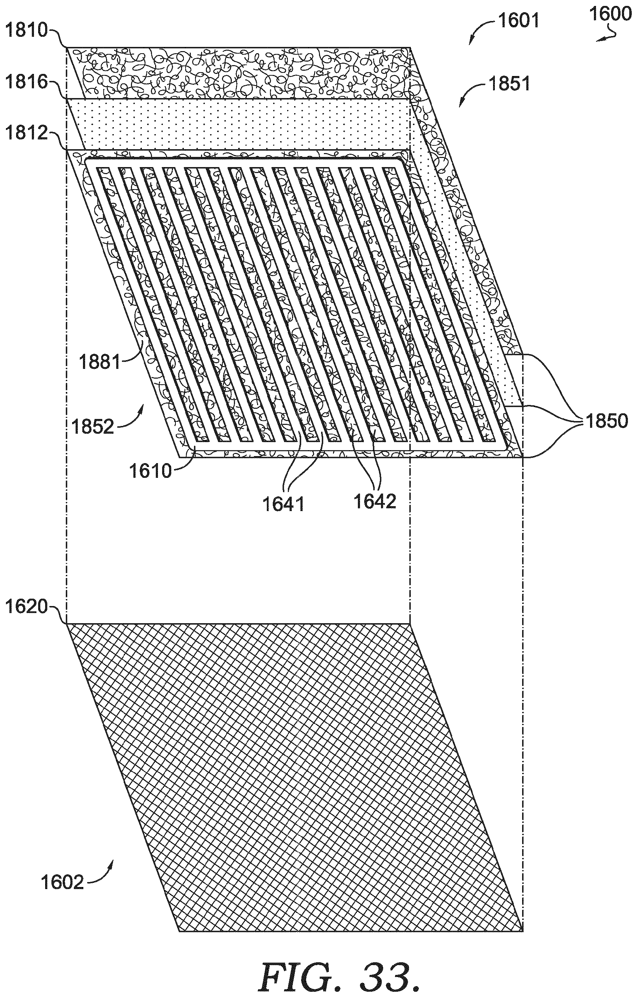

As shown in FIG. 33, which illustrates an exploded view of the pleated construction 1600, the composite nonwoven textile 1850 includes a first entangled web of fibers 1810, a second entangled web of fibers 1812, and an elastomeric layer 1816 positioned between the first entangled web of fibers 1810 and the second entangled web of fibers 1812. The composite nonwoven textile 1850 is formed by performing an entanglement process on the first web of fibers 110, the second web of fibers 112, and the elastomeric layer 116. As such, the first entangled web of fibers 1810 includes the fibers 210 (not identified) from the first web of fibers 110 and forms, at least in part, a first outer facing side 1851 of the composite nonwoven textile 1850 (shown in FIG. 32A). Likewise, the second entangled web of fibers 1812 includes the fibers 310, 312 (not identified) from the second web of fibers 112 and forms, at least in part, an opposite second outer facing side 1852 of the composite nonwoven textile 1850. The elastomeric layer 1816 is formed from thermoplastic elastomers such as thermoplastic polyurethane (TPU), thermoplastic polyether ester elastomer (TPEE), combinations of TPU and TPEE and the like.

The elastically resilient structured textile 1620 is positioned adjacent to an outermost surface 1881 of the second entangled web of fibers 1812 and affixed thereto via an adhesive layer 1610. In example aspects, the adhesive layer 1610 is included in the pleated construction 1600 such that the elastically resilient structured textile 1620 is affixed to the second entangled web of fibers 1812 at intermittent areas of the outermost surface 1881. In the example of FIG. 33, the adhesive layer 1610 is included on the outermost surface 1881 at one or more first areas 1641 and is not present on the outermost surface 1881 at one or more second areas 1642. As a result of this configuration of the adhesive layer 1610, the elastically resilient structured textile 1620 is affixed to the second entangled web of fibers 1812 at the one or more first areas 1641 and is unaffixed from the second entangled web of fibers 1812 at the one or more second areas 1642.

Aspects herein contemplate that each of the one or more first areas 1641 has a length and a width in which the length is greater than the width at the one or more first areas 1641. Continuing with these example aspects, each of the one or more second areas 1642 has a length and a width in which the length is greater than the width at the one or more second areas. In other aspects, the one or more first areas 1641 are spaced apart from each other by the one or more second areas 1642.

In example aspects, the adhesive layer 1610 may be a heat-activated adhesive that is configured to melt flow when heated to a specified temperature. In one such aspect, a heat activation temperature of the adhesive layer 1610 is from about 125°C to about 135 °C. In example aspects, the heat activation temperature of the adhesive layer 1610 is less than the melt temperature of the materials forming each of the first entangled web of fibers 1810, the second entangled web of fibers 1812, and the elastomeric layer 1816 (melt temperatures are noted above). Other aspects contemplate that the adhesive layer 1610 may be further configured to chemically bond with the composite nonwoven textile 1850 and/or to mechanically bond with the elastically resilient structured textile 1620. Further aspects contemplate that the adhesive layer 1610 may be a thermoplastic film, and in one example aspect, the adhesive layer 1610 comprises a thermoplastic elastomer. In another example aspect, the adhesive layer 1610 may be a Bemis adhesive tape.

In additional example aspects, the elastically resilient structured textile 1620 is configured to have stretch and recovery properties. As such, applying tension causes the elastically resilient structured textile 1620 to transition to a tensioned state, and once the tension is released, the elastically resilient structured textile 1620 transitions out of the tensioned state and back to its resting state. Other aspects herein contemplate that the elastically resilient structured textile 1620 comprises a warp or weft knit mesh construction and a material having stretch and recovery properties. In one example, the elastically resilient structured textile 1620 includes a first material that comprises elastic yarns and/or a second material that comprises polyester.

Further aspects herein contemplate that the composite nonwoven textile 1850 may include one or more additional entangled webs of fibers and/or layers, which may be any of the entangled webs of fibers and/or layers discussed herein. In more specific aspects, any of the one or more additional entangled webs of fibers and/or layers of the composite nonwoven textile 1850 may be the first entangled web of fibers 810, 910, 1210, 1810, the second entangled web of fibers 812, 912, 1212, 1812, the interior entangled web of fibers 814, the third entangled web of fibers 914, the elastomeric layers 116, 1216, 1816, the interior layer 120, the printed layers 170, 870, 970, or the spunlace layer 920. Additional aspects contemplate that properties of the one or more additional entangled webs of fibers and/or layers may be adjusted and/or selectively included to achieve desired end properties for the composite nonwoven textile 1850. Further aspects contemplate that an arrangement of the one or more additional entangled webs of fibers and/or layers, the first entangled web of fibers 1810, the second entangled web of fibers 1812, and the elastomeric layer 1816 may be adjusted and/or configured to achieve desired end properties for the composite nonwoven textile 1850.

In example aspects, the first entangled web of fibers 1810, the second entangled web of fibers 1812, and the elastomeric layer 1816 may each be configured to afford the composite nonwoven textile 1850 a textile stiffness, stretch, and/or recovery that is suitable for forming the pleated construction 1600. In one aspect, the composite nonwoven textile 1850 may have a textile stiffness that is insufficient to resist the recovery properties of the elastically resilient structured textile 1620. In another aspect, the first entangled web of fibers 1810, the second entangled web of fibers 1812, and the elastomeric layer 1816 may each be configured to have a melt temperature that is higher than the activation temperature of the adhesive layer 1610. Further aspects herein contemplate that properties of the fibers 210, 310, 312 and the elastomeric layer 1816 may be adjusted and/or selectively included to achieve desired end properties for the composite nonwoven textile 1850. Any and all aspects, and any variation thereof, are contemplated as being within aspects herein.

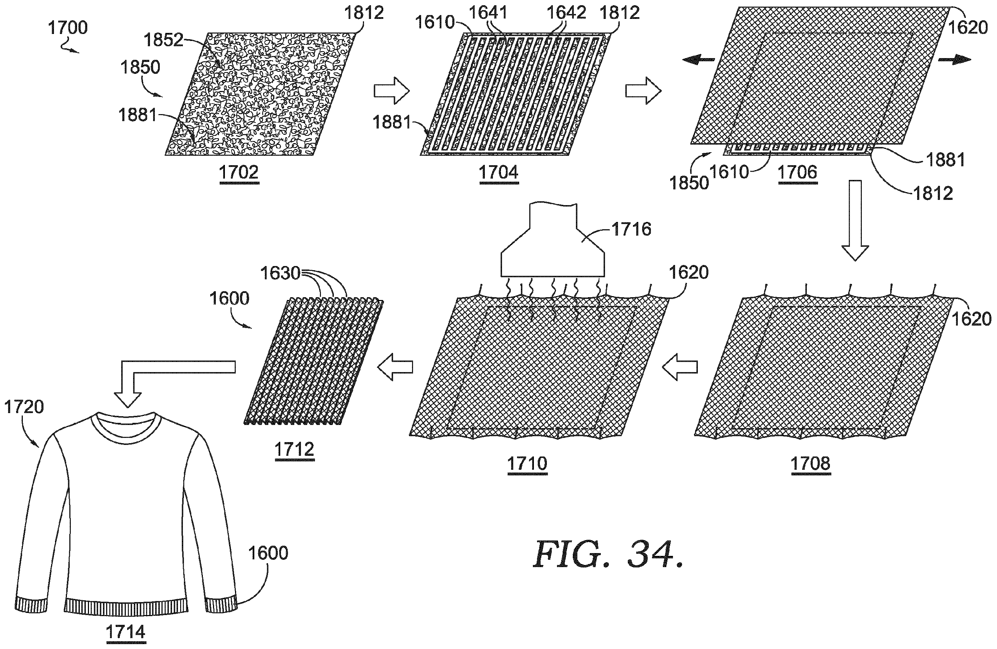

FIG. 34 illustrates an example manufacturing process, referenced generally by the numeral 1700, for use in forming the pleated construction 1600 and for incorporating the same in an article of apparel 1720. It is to be understood that any depictions of manufacturing components in FIG. 34 are illustrative and meant to convey general features of individual steps of the manufacturing process 1700. Additionally, while steps of the manufacturing process 1700 are depicted as being performed in a sequential order, aspects herein contemplate that the manufacturing process 1700 may include any combination of one or more steps, any of which may be repeated or performed in a different order than as depicted.

At a high level, FIG. 34 depicts individual steps of the manufacturing process 1700 that generally include tensioning the elastically resilient structured textile 1620, positioning the elastically resilient structured textile 1620 onto a surface of the composite nonwoven textile 1850 while in the tensioned state, selectively affixing the composite nonwoven textile 1850 to the elastically resilient structured textile 1620 at the one or more first areas 1641, and releasing the tension applied to the elastically resilient structured textile 1620 to form the plurality of pleats 1630.

Beginning with a step 1702, the composite nonwoven textile 1850 is obtained and/or provided. The composite nonwoven textile 1850 includes the first entangled web of fibers 1810 (not visible), the second entangled web of fibers 1812, and the elastomeric layer 1816 (not visible) positioned between the first entangled web of fibers 1810 and the second entangled web of fibers 1812.

At a step 1704, the adhesive layer 1610 is applied to the outermost surface 1881 of the second entangled web of fibers 1812. The adhesive layer 1610 is applied in a manner that aligns with the one or more first areas 1641. In example aspects, each of the one or more first areas 1641 has a length and a width in which the length is greater than the width at the one or more first areas 1641. Continuing with these example aspects, each of the one or more second areas 1642 has a length and a width in which the length is greater than the width at the one or more second areas 1642. In other aspects, the one or more first areas 1641 are spaced apart from each other by the one or more second areas 1642. In example aspects, a longitudinal axis of the one or more first areas 1641 is in parallel alignment with a longitudinal axis of the one or more second areas 1642.

At a step 1706, the elastically resilient structured textile 1620 is tensioned. In aspects, the elastically resilient structured textile 1620 may be tensioned by elongating the elastically resilient structured textile 1620 in its warp or walewise direction, or machine direction, which is indicated by arrows. In example aspects, the tension applied to the elastically resilient structured textile 1620 is sufficient to elongate the elastically resilient structured textile 1620 by about 55%. In additional aspects, the tension applied to the elastically resilient structured textile 1620 elongates the elastically resilient structured textile 1620 by a percentage from about 75% to about 25%, from about 70% to about 30%, from about 65% to about 35%, from about 60% to about 40%, or from about 55% to about 45%. At a step 1708, the elastically resilient structured textile 1620 is positioned onto the outermost surface 1881 of the second entangled web of fibers 1812 of the composite nonwoven textile 1850. Further, the elastically resilient structured textile 1620 is positioned while in the tensioned state.

At a step 1710, the composite nonwoven textile 1850 is selectively affixed to the elastically resilient structured textile 1620 at the one or more first areas 1641. In example aspects, the composite nonwoven textile 1850 and the elastically resilient structured textile 1620 may be selectively affixed by applying heat at a temperature that is sufficient to activate the adhesive layer 1610. In the example of FIG. 34, a heating element 1716 is used to apply heat, and in one aspect, the heating element 1716 is a heat press. In further example aspects, the composite nonwoven textile 1850 and the elastically resilient structured textile 1620 may be selectively affixed by applying a first cycle of heat at a temperature of from about 150°C to about 160°C for a duration of about 10 seconds and then applying a second cycle of heat at a temperature of from about 150°C to about 160 °C for a duration of about 10 seconds. In other aspects, pressure may also be applied during the affixing of the composite nonwoven textile 1850 and the elastically resilient structured textile 1620. Aspects herein also contemplate that, after the application of heat is ceased, the elastically resilient structured textile 1620 is maintained in the tensioned state for about 20 seconds.

At a step 1712, the tension applied to the elastically resilient structured textile 1620 is released, thereby forming the plurality of pleats 1630 and in turn, the pleated construction 1600 (e.g., the composite nonwoven textile 1850 with the plurality of pleats 1630). When released, the one or more first areas 1641 form the valleys of the plurality of pleats 1630 at the second side 1602 of the pleated construction 1600, and the one or more second areas 1642 form the peaks of the plurality of pleats 1630 at the first side 1601 of the pleated construction 1600. Aspects herein contemplate that at the one or more first areas 1641, the elastically resilient structured textile 1620 is maintained in a tensioned state due to the adhesive layer 1610 at least partially impregnating the elastically resilient structured textile 1620 and "locking in" the knit or woven construction at these areas. As shown, a longitudinal axis of the plurality of pleats 1630 is in parallel alignment with a longitudinal axis of the one or more first areas 1641 and/or the one or more second areas 1642.

At a step 1714, the pleated construction 1600 is incorporated into the article of apparel 1720. The pleated construction 1600 may form at least a portion of the article of apparel 1720, and one example aspect contemplates that the pleated construction 1600 forms a cuff of the article of apparel 1720 where the cuff may be located at, for example, a distal end of a sleeve, a waist opening, a collar, a waistband, a distal leg cuff, and the like.

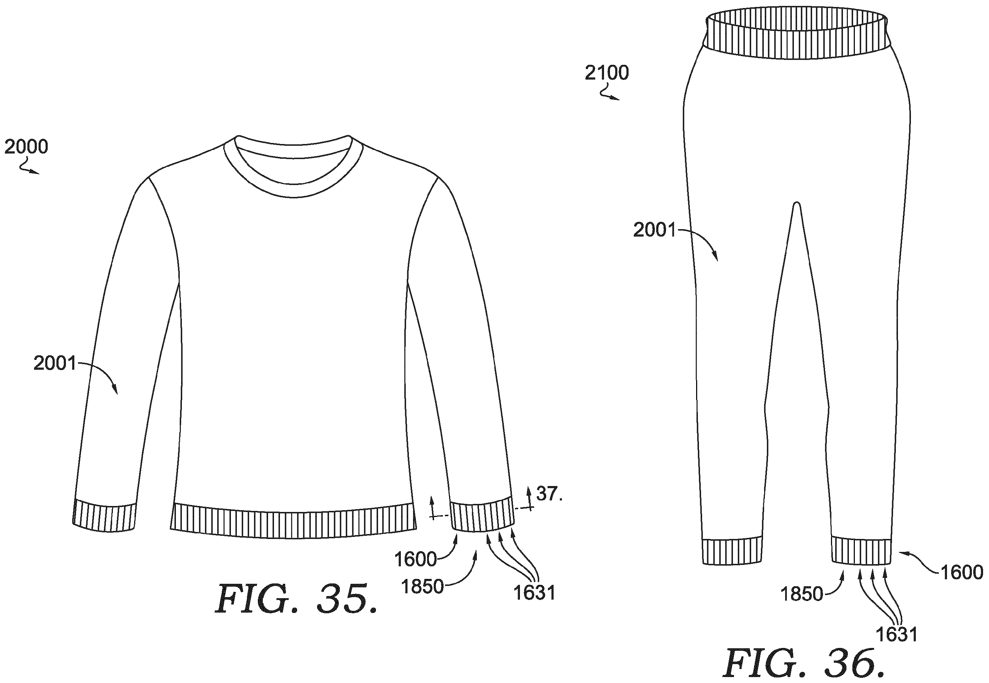

FIG. 35 depicts an upper body article of apparel 2000 having one or more portions formed from the composite nonwoven textile 1850, where the article of apparel 2000 includes the pleated construction 1600 at one or more locations on the article of apparel 2000. Similarly, FIG. 36 depicts a lower body article of apparel 2100 having one or more portions formed form the composite nonwoven textile 1850, where the article of apparel 2100 includes the pleated construction 1600 at one or more locations on the article of apparel 2100. An outer-facing surface 2001 is shown for both the article of apparel 2000 and the article of apparel 2100. With respect to the article of apparel 2000, the pleated construction 1600 forms a cuff located at sleeve ends, and with respect to the article of apparel 2100, the pleated construction 1600 forms a cuff located at leg openings of the article of apparel 2100. The pleated construction 1600 may also be used to form a waist opening as shown for the article of apparel 2000, and a waistband for the article of apparel 2100.

Each of the cuffs may include a first plurality of pleats 1631 formed by the composite nonwoven textile 1850, the elastically resilient structured textile 1620, and the adhesive layer 1610 as described in relation to FIG. 34. In one example aspect, the cuffs may be formed by folding the pleated construction 1600 such that surfaces of the elastically resilient structured textile 1620 are positioned adjacent to each other (i.e., the surfaces are in a face-sharing relationship) and the composite nonwoven textile 1850 forms both an outer-facing surface of the cuffs and an inner-facing surface of the cuffs.

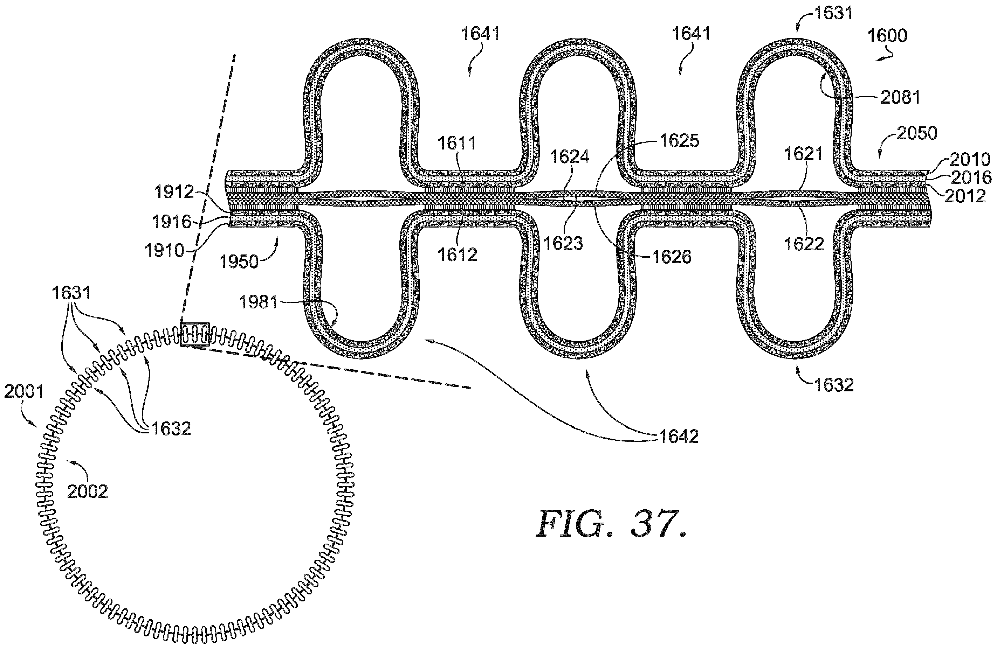

FIG. 37 illustrates a cross-section view of the cuff of the upper body article of apparel 2000 and also depicts a magnified view of a portion the cross-section. As shown, the pleated construction 1600 is folded or reconfigured such that a surface of the elastically resilient structured textile 1620 that was an outer-facing surface of the pleated construction 1600 forms two surfaces positioned adjacent to each other (i.e., the surfaces are in a face-sharing relationship). The composite nonwoven textile 1850 forms both an outer-facing surface of the cuffs and an inner-facing surface of the cuffs. As such, the first plurality of pleats 1631 is positioned on the outermost-facing surface 2001 of the upper body article of apparel 2000, and a second plurality of pleats 1632 is positioned on an innermost-facing surface 2002 of the upper body article of apparel 2000.

The first plurality of pleats 1631 is included at a first portion of the pleated construction 1600 and is formed by a first composite nonwoven textile 2050 (i.e., a portion of the composite nonwoven textile 1850 forming an outer-facing surface of the cuffs), a first elastically resilient structured textile 1621, and a first adhesive layer 1611. Similarly, the second plurality of pleats 1632 is included at a second portion of the pleated construction 1600 and is formed by a second composite nonwoven textile 1950 (i.e., a portion of the composite nonwoven textile 1850 forming an inner-facing surface of the cuffs), a second elastically resilient structured textile 1622, and a second adhesive layer 1612. The first composite nonwoven textile 2050 and the second composite nonwoven textile 1950 are each portions of the composite nonwoven textile 1850 and therefore, have the same features. As such, the first composite nonwoven textile 2050 includes a first entangled web of fibers 2010, a second entangled web of fibers 2012, and a first elastomeric layer 2016 positioned between the first entangled web of fibers 2010 and the second entangled web of fibers 2012. Similarly, the second composite nonwoven textile 1950 includes a third entangled web of fibers 1910, a fourth entangled web of fibers 1912, and a second elastomeric layer 1916 positioned the third entangled web of fibers 1910 and the fourth entangled web of fibers 1912. In one example aspect, the first and second composite nonwoven textiles 2050, 1950 may be sourced from a different composite nonwoven textile and therefore, may include one or more different features.

As shown in the magnified view of FIG. 37, the second entangled web of fibers 2012 has a first outermost surface 2081 that is affixed to a third surface 1625 of the first elastically resilient structured textile 1621 at the one or more first areas 1641, and the fourth entangled web of fibers 1912 has a second outermost surface 1981 that is affixed to a fourth surface 1626 of the second elastically resilient structured textile 1622 at the one or more first areas 1641. At the one or more second areas 1642, the first and second outermost surfaces 2081, 1981 are respectively unaffixed from the first and second elastically resilient structured textiles 1621, 1622, which, at least in part, contributes to a formation of peaks and valleys in the first and second composite nonwoven textiles 2050, 1950. Further, the first elastically resilient structured textile 1621 and the second elastically resilient structured textile 1622 may be in a tensioned state at the one or more first areas 1641 (i.e., held in tension by the adhesive layer 1610) and may be non-tensioned at the one or more second areas 1642, which may also contributes to a formation of peaks and valleys in the first and second composite nonwoven textiles 2050, 1950.

In aspects, throughout the cuffs, the first and second elastically resilient structured textiles 1621, 1622 maintain an adjacent position but may be spaced apart in differing manners. In FIG. 37, a first surface 1623 of the first elastically resilient structured textile 1621 is spaced apart from a second surface 1624 of the second elastically resilient structured textile 1622 at the one or more second areas 1642, and at the one or more first areas 1641, the first and second surfaces 1623, 1624 are shown as contacting one another. Stated differently, the first and second surfaces 1623, 1624 are in a face-sharing relationship throughout the cuffs.

It is to be understood that the depictions of FIG. 37 are illustrative and that aspects herein contemplate that the pleated construction 1600 may have one or more different configurations throughout the cuffs. In one example, the first and second surfaces 1623, 1624 may be spaced apart at the one or more first areas 1641. In another example, the first plurality of pleats 1631 may be offset from the second plurality of pleats 1632.

## Claims

1. A pleated construction comprising:
a composite nonwoven textile comprising a first entangled web of fibers, a second entangled web of fibers, and an elastomeric layer positioned between the first entangled web of fibers and the second entangled web of fibers;
an elastically resilient structured textile positioned adjacent an outermost surface of the second entangled web of fibers; and
a plurality of pleats formed from the composite nonwoven textile and the elastically resilient structured textile.

2. The pleated construction of claim 1 further comprising an adhesive layer that affixes the elastically resilient structured textile to the second entangled web of fibers at one or more first areas.

3. The pleated construction of any of claims 1-2, wherein the elastically resilient structured textile is affixed to the second entangled web of fibers at one or more first areas and is unaffixed from the second entangled web of fibers at one or more second areas;
wherein, optionally, each of the one or more first areas has a length and a width, the length being greater than the width at the one or more first areas, and wherein each of the one or more second areas has a length and a width, the length being greater than the width at the one or more second areas.

4. The pleated construction of claim 3, wherein the one or more first areas are spaced apart from each other by the one or more second areas.

5. The pleated construction of claim 3-4, wherein each of the one or more first areas has a longitudinal axis that is in parallel alignment with a longitudinal axis of the one or more second areas; and/or
wherein each of the one or more first areas has a longitudinal axis that is in parallel alignment with a longitudinal axis of one or more of the plurality of pleats.

6. The pleated construction of claim 1, wherein:
the pleated construction is at least at a first portion of an apparel item ;the composite nonwoven textile is a first composite nonwoven textile and the elastomeric layer is a first elastomeric layer;
the elastically resilient structured textile is a first elastically resilient structured textile positioned adjacent to a first outermost surface of the first composite nonwoven textile; and
the plurality of pleats is a first plurality of pleats.

7. The pleated construction of claim 6, wherein the apparel item is an upper body article of apparel; or
wherein the apparel item is a lower body article of apparel.

8. The pleated construction of any of claims 6-7 further comprising:
a second composite nonwoven textile comprising a third entangled web of fibers, a fourth entangled web of fibers, a second elastomeric layer positioned between the third entangled web of fibers and the fourth entangled web of fibers;
a second elastically resilient structured textile positioned adjacent to a second outermost surface of the second composite nonwoven textile; and
a second plurality of pleats formed from the second composite nonwoven textile and the second elastically resilient structured textile, wherein the second elastically resilient structured textile is in a face-sharing relationship with the first elastically resilient structured textile.

9. The pleated construction of any of claims 6-8, wherein the first plurality of pleats is positioned on an outermost-facing surface of the apparel item.

10. The pleated construction of any of claims 8-9, wherein the second plurality of pleats is positioned on an innermost-facing surface of the apparel item.

11. A method of manufacturing a composite nonwoven textile with a plurality of pleats, the method comprising:
tensioning an elastically resilient structured textile to transition the elastically resilient structured textile to a tensioned state,
positioning the elastically resilient structured textile while in the tensioned state onto a surface of the composite nonwoven textile;
selectively affixing the composite nonwoven textile to the elastically resilient structured textile at one or more first areas; and
releasing the tension applied to the elastically resilient structured textile to form the plurality of pleats.

12. The method of claim 11, wherein the composite nonwoven textile comprises a first entangled web of fibers, a second entangled web of fibers, and an elastomeric layer positioned between the first entangled web of fibers and the second entangled web of fibers;
wherein, optionally, the elastically resilient structured textile is affixed to an outermost surface of the second entangled web of fibers.

13. The method of claim 12, wherein the elastically resilient structured textile is unaffixed from the second entangled web of fibers at one or more second areas;
wherein, optionally, each of the one or more first areas has a length and a width, the length being greater than the width at the one or more first areas, and wherein each of the one or more second areas has a length and a width, the length being greater than the width at the one or more second areas.

14. The method of claim 13, wherein the one or more first areas are spaced apart from each other by the one or more second areas.

15. The method of any of claims 11-14, wherein, subsequent to releasing the tension, the elastically resilient structured textile remains in the tensioned state at the one or more first areas.

## Patentansprüche

1. Eine gefaltete bzw. plissierte Konstruktion, umfassend:
ein Verbund-Vliestextil, umfassend eine erste verschlungene Faserlage, eine zweite verschlungene Faserlage und eine elastomere Schicht, die zwischen der ersten verschlungenen Faserlage und der zweiten verschlungenen Faserlage angeordnet ist;
ein elastisch rückstellfähiges strukturiertes Textil, das an eine äußerste Oberfläche der zweiten verschlungenen Faserlage angrenzt; und
einer Vielzahl von Falten bzw. Plisseefalten, die aus dem Verbund-Vliestextil und dem elastisch rückstellfähigen strukturierten Textil gebildet sind.

2. Die gefaltete bzw. plissierte Konstruktion nach Anspruch 1, ferner umfassend eine Klebeschicht, die das elastisch rückstellfähige strukturierte Textil in einem oder mehreren ersten Bereichen an der zweiten verschlungenen Faserlage befestigt.

3. Die gefaltete bzw. plissierte Konstruktion nach irgendeinem der Ansprüche von 1 bis 2, wobei das elastisch rückstellfähige strukturierte Textil in einem oder mehreren ersten Bereichen an der zweiten verschlungenen Faserlage befestigt ist und in einem oder mehreren zweiten Bereichen nicht an der zweiten verschlungenen Faserlage befestigt ist;
wobei, optional, jeder des einen oder der mehreren ersten Bereiche eine Länge und eine Breite aufweist, wobei die Länge in dem einen oder den mehreren ersten Bereichen größer ist als die Breite, und wobei jeder des einen oder der mehreren zweiten Bereiche eine Länge und eine Breite aufweist, wobei die Länge in dem einen oder den mehreren zweiten Bereichen größer ist als die Breite.

4. Die gefaltete bzw. plissierte Konstruktion nach Anspruch 3, wobei der eine oder die mehreren ersten Bereiche durch den einen oder die mehreren zweiten Bereiche voneinander beabstandet sind.

5. Die gefaltete bzw. plissierte Konstruktion nach Anspruch von 3 bis 4, wobei jeder des einen oder der mehreren ersten Bereiche eine Längsachse aufweist, die parallel zu einer Längsachse der einen oder der mehreren zweiten Bereiche ausgerichtet ist; und/oder
wobei jeder des einen oder der mehreren ersten Bereiche eine Längsachse aufweist, die parallel zu einer Längsachse einer oder mehrerer der Vielzahl von Falten bzw. Plisseefalten ausgerichtet ist.

6. Die gefaltete bzw. plissierte Konstruktion nach Anspruch 1, wobei:
sich die gefaltete bzw. plissierte Konstruktion zumindest an einem ersten Abschnitt eines Bekleidungsartikels befindet; das Verbund-Vliestextil ein erstes Verbund-Vliestextil ist, und die elastomere Schicht eine erste elastomere Schicht ist;
das elastisch rückstellfähige strukturierte Textil ein erstes elastisch rückstellfähiges strukturiertes Textil ist, das an eine erste äußerste Oberfläche des ersten Verbund-Vliestextiles angrenzt; und wobei
die Vielzahl von Falten bzw. Plisseefalten eine erste Vielzahl von Falten bzw. Plisseefalten ist.

7. Die gefaltete bzw. plissierte Konstruktion nach Anspruch 6, wobei der Bekleidungsartikel ein Oberkörper-Bekleidungsartikel ist; oder
wobei der Bekleidungsartikel ein Unterkörper-Bekleidungsartikel ist.

8. Die gefaltete bzw. plissierte Konstruktion nach irgendeinem der Ansprüche von 6 bis 7, ferner umfassend:
ein zweites Verbund-Vliestextil, umfassend eine dritte verschlungene Faserlage, eine vierte verschlungene Faserlage und eine zweite elastomere Schicht, die zwischen der dritten verschlungenen Faserlage und der vierten verschlungenen Faserlage angeordnet ist;
ein zweites elastisch rückstellfähiges strukturiertes Textil, das benachbart zu einer zweiten äußersten Oberfläche des zweiten Verbund-Vliestextils angeordnet ist; und
eine zweite Vielzahl von Falten bzw. Plisseefalten, die aus dem zweiten Verbund-Vliestextil und dem zweiten elastisch rückstellfähigen strukturierten Textil gebildet sind, wobei das zweite elastisch rückstellfähige strukturierte Textil in flächiger Gegenüberlage zum ersten elastisch rückstellfähigen strukturierten Textil steht.

9. Die gefaltete bzw. plissierte Konstruktion nach irgendeinem der Ansprüche von 6 bis 8, wobei die erste Vielzahl von Falten bzw. Plisseefalten auf einer nach außen gerichteten äußersten Oberfläche des Bekleidungsartikels angeordnet ist.

10. Die gefaltete bzw. plissierte Konstruktion nach irgendeinem der Ansprüche 8 bis 9, wobei die zweite Vielzahl von Falten bzw. Plisseefalten auf einer nach innen gerichteten innersten Oberfläche des Bekleidungsartikels angeordnet ist.

11. Ein Verfahren zur Herstellung eines Verbund-Vliestextils mit einer Vielzahl von Falten bzw. Plisseefalten, wobei das Verfahren Folgendes umfasst:
Spannen eines elastisch rückstellfähigen strukturierten Textils, um das elastisch rückstellfähige strukturierte Textil in einen gespannten Zustand zu überführen,
Positionieren des elastisch rückstellfähigen strukturierten Textils im gespannten Zustand auf einer Oberfläche des Verbund-Vliestextils;
selektives Befestigen des Verbund-Vliestextils am elastisch rückstellfähigen strukturierten Textil in einem oder mehreren ersten Bereichen; und
Lösen der auf das elastisch rückstellfähige strukturierte Textil ausgeübten Spannung, um die Vielzahl von Falten bzw. Plisseefalten zu bilden.

12. Das Verfahren nach Anspruch 11, wobei das Verbund-Vliestextil eine erste verschlungene Faserlage, eine zweite verschlungene Faserlage und eine elastomere Schicht, die zwischen der ersten verschlungenen Faserlage und der zweiten verschlungenen Faserlage angeordnet ist;
wobei, optional, das elastisch rückstellfähige strukturierte Textil an einer äußersten Oberfläche der zweiten verschlungenen Faserlage befestigt ist.

13. Das Verfahren nach Anspruch 12, wobei das elastisch rückstellfähige strukturierte Textil in einem oder mehreren zweiten Bereichen nicht an der zweiten verschlungenen Faserlage befestigt ist;
wobei, optional, jeder des einen oder der mehreren ersten Bereiche eine Länge und eine Breite aufweist, wobei die Länge in dem einen oder den mehreren ersten Bereichen größer ist als die Breite, und wobei jeder des einen oder der mehreren zweiten Bereiche eine Länge und eine Breite aufweist, wobei die Länge in dem einen oder den mehreren zweiten Bereichen größer ist als die Breite.

14. Das Verfahren nach Anspruch 13, wobei der eine oder die mehreren ersten Bereiche durch den einen oder die mehreren zweiten Bereiche voneinander beabstandet sind.

15. Das Verfahren nach irgendeinem der Ansprüche von 11 bis 14, wobei das elastisch rückstellfähige strukturierte Textil nach dem Lösen der Spannung in dem einen oder den mehreren ersten Bereichen im gespannten Zustand verbleibt.

## Revendications

1. Une construction plissée comprenant :
un textile non tissé composite comprenant une première nappe de fibres enchevêtrées, une deuxième nappe de fibres enchevêtrées, et une couche élastomère disposée entre la première nappe de fibres enchevêtrées et la deuxième nappe de fibres enchevêtrées ;
un textile structuré élastiquement résilient positionné de manière adjacente à une surface la plus externe de la deuxième nappe de fibres enchevêtrées ; et
une pluralité de plis ou encore de plis plissés formés à partir du textile non tissé composite et du textile structuré élastiquement résilient.

2. La construction plissée d'après la revendication 1, comprenant en outre une couche adhésive qui fixe le textile structuré élastiquement résilient à la deuxième nappe de fibres enchevêtrées dans une ou plusieurs premières zones.

3. La construction plissée d'après l'une quelconque des revendications de 1 à 2, sachant que le textile structuré élastiquement résilient est fixé à la deuxième nappe de fibres enchevêtrées dans une ou plusieurs premières zones et n'est pas fixé à la deuxième nappe de fibres enchevêtrées dans une ou plusieurs deuxièmes zones ;
sachant que, facultativement, chacune de la ou des premières zones présente une longueur et une largeur, la longueur étant supérieure à la largeur dans la ou les premières zones, et sachant que chacune de la ou des deuxièmes zones présente une longueur et une largeur, la longueur étant supérieure à la largeur dans la ou les deuxièmes zones.

4. La construction plissée d'après la revendication 3, sachant que la ou les premières zones sont espacées les unes des autres par la ou les deuxièmes zones.

5. La construction plissée d'après les revendications de 3 à 4, sachant que chacune de la ou des premières zones présente un axe longitudinal qui est aligné parallèlement à un axe longitudinal de la ou des deuxièmes zones ; et/ou
sachant que chacune de la ou des premières zones présente un axe longitudinal qui est aligné parallèlement à un axe longitudinal d'un ou plusieurs plis parmi la pluralité de plis.

6. La construction plissée d'après la revendication 1, sachant que :
la construction plissée est présente au moins au niveau d'une première portion d'un article d'habillement ;
le textile non tissé composite est un premier textile non tissé composite et la couche élastomère est une première couche élastomère ;
le textile structuré élastiquement résilient est un premier textile structuré élastiquement résilient positionné de manière adjacente à une première surface la plus externe du premier textile non tissé composite ; et que
la pluralité de plis est une première pluralité de plis.

7. La construction plissée d'après la revendication 6, sachant que l'article d'habillement est un article d'habillement pour le haut du corps ; ou
sachant que l'article d'habillement est un article d'habillement pour le bas du corps.

8. La construction plissée d'après l'une quelconque des revendications 6 à 7, comprenant en outre :
un deuxième textile non tissé composite comprenant une troisième nappe de fibres enchevêtrées, une quatrième nappe de fibres enchevêtrées, une deuxième couche élastomère positionnée entre la troisième nappe de fibres enchevêtrées et la quatrième nappe de fibres enchevêtrées ;
un deuxième textile structuré élastiquement résilient positionné de manière adjacente à une deuxième surface la plus externe du deuxième textile non tissé composite ; et
une deuxième pluralité de plis formés à partir du deuxième textile non tissé composite et du deuxième textile structuré élastiquement résilient, sachant que le deuxième textile structuré élastiquement résilient est en relation de partage de face avec le premier textile structuré élastiquement résilient.

9. La construction plissée d'après l'une quelconque des revendications de 6 à 8, sachant que la première pluralité de plis est positionnée sur une surface la plus externe orientée vers l'extérieur du vêtement.

10. La construction plissée d'après l'une quelconque des revendications de 8 à 9, sachant que la deuxième pluralité de plis est positionnée sur une surface la plus interne tournée vers l'intérieur du vêtement.

11. Un procédé de fabrication d'un textile non tissé composite avec une pluralité de plis ou encore de plis plissés, le procédé comprenant :
la mise en tension d'un textile structuré élastiquement résilient afin de faire passer ledit textile structuré élastiquement résilient dans un état tendu,
le positionnement du textile structuré élastiquement résilient, alors qu'il se trouve dans l'état tendu, sur une surface du textile non tissé composite ;
la fixation sélective du textile non tissé composite sur le textile structuré élastiquement résilient dans une ou plusieurs premières zones ; et
le relâchement de la tension appliquée au textile structuré élastiquement résilient afin de former la pluralité de plis.

12. Le procédé d'après la revendication 11, sachant que le textile non tissé composite comprend une première nappe de fibres enchevêtrées, une deuxième nappe de fibres enchevêtrées et une couche élastomère positionnée entre la première nappe de fibres enchevêtrées et la deuxième nappe de fibres enchevêtrées ;
sachant que, facultativement, le textile structuré élastiquement résilient est fixé à une surface la plus externe de la deuxième nappe de fibres enchevêtrées.

13. Le procédé d'après la revendication 12, sachant que le textile structuré élastiquement résilient n'est pas fixé à la deuxième nappe de fibres enchevêtrées dans une ou plusieurs deuxièmes zones ;
sachant que, facultativement, chacune de la ou des premières zones présente une longueur et une largeur, la longueur étant supérieure à la largeur dans la ou les premières zones, et sachant que chacune de la ou des deuxièmes zones présente une longueur et une largeur, la longueur étant supérieure à la largeur dans la ou les deuxièmes zones.

14. Le procédé d'après la revendication 13, sachant que la ou les premières zones sont espacées les unes des autres par la ou les deuxièmes zones.

15. Le procédé d'après l'une quelconque des revendications de 11 à 14, sachant que, après avoir relâché la tension, le textile structuré élastiquement résilient reste à l'état tendu dans la ou les premières zones.
